# EUROPÄISCHE PATENTSCHRIFT

(11) **EP 1 887 263 B1**
(45) Veröffentlichungstag und Bekanntmachung des Hinweises auf die Patenterteilung: **24.03.2010**
(21) Anmeldenummer: 07015484.4
(22) Anmeldetag: 07.08.2007
(51) Int. Cl.: F16J 3/04, B23K 26/12

(54) **Schutzbalg**
Protection bellows
Soufflet protecteur

(30) Priorität: 11.08.2006 DE 102006037918
(43) Veröffentlichungstag der Anmeldung: 13.02.2008
(73) Patentinhaber: Arno Arnold GmbH, 63179 Obertshausen (DE)
(72) Erfinder: Kreutzer, Thomas, 64291 Darmstadt (DE)
(74) Vertreter: von den Steinen, Axel

(56) Entgegenhaltungen:
- DE-A1- 10 137 803
- DE-U1-202004 005 303
- FR-A- 1 279 424
- GB-A- 1 056 660
- JP-A- 2000 161 487
- JP-A- 2003 245 790

## Beschreibung

Die Erfindung betrifft einen Schutzbalg gemäß dem Oberbegriff des Patentanspruchs 1, der aus einer Aneinanderreihung einzelner Schutzbalgsegmente besteht, wobei ein einzelnes Schutzbalgsegment ein im Wesentlichen zylindrisches Faltenbalgsegment, einen Führungsrahmen und mindestens eine Lochblende umfasst.

Aus dem Stand der Technik sind Schutzbälge bekannt, die vornehmlich zur Führung von Laserstrahlen dienen. Solche Schutzbälge werden sowohl in rechteckiger als auch in runder Form hergestellt, und weisen in vielen Fällen eine gasdichte Eigenschaft auf, um ein Inertgas innerhalb des Schutzbalgs gegenüber der Umwelt abzuschließen. Hierbei ist es aus dem Stand der Technik bekannt, dass derartige Faltenbälge Führungsrahmen aufweisen, mit deren Hilfe sie entlang von Führungsschienen aus- und eingezogen werden können. Des Weiteren weisen die bekannten Führungsbälge Lochblenden auf, die zum einen die Stabilität der Schutzbälger verbessern, zum anderen einen geführten Verlauf des Laserstrahls entlang des Schutzbalgs unterstützen. Vielfach werden die bekannten Faltenbälge aus Textilstoff hergestellt, und müssen aufwendig kaschiert werden, um die geforderte Gasdichtheit und notwendige Stabilität zu erreichen. Des Weiteren ergeben sich Probleme bei der Befestigung der Lochblende innerhalb des Faltenbalgs, da sich dieser beim Ein-und Auszug im Querschnitt verändert, und somit eine geeignete Aufnahmeposition der Lochblende nur schwer zu finden ist. Aus diesem Grund wurde bereits in der Vergangenheit Schutzbälge entwickelt, die aus einem flexiblen kunststoffartigen Material aufgebaut sind, wobei die einzelnen Faltenbalgsegmente aus einzelnen kreisrunden PVC-Ringen aufgebaut wurden, die miteinander verklebt oder verschweißt werden. Innerhalb solcher aus einzelnen Faltenbalgstreifen zusammengebauten Faltenbalgsegmenten werden in der Mitte jeder Flanke, die einen Berg mit einem Tal des Schutzbalgs verbindet, Aufnahmevorrichtungen vorgesehen, in denen Lochblenden aufgenommen werden können. Der Radius der Mitte der Flanke, die einen Berg mit einem Tal eines Faltenbalgs verbindet, bleibt beim Ein- und Auszug des Faltenbalgs unverändert, d. h. ihr Radius ändert sich beim Ein- und Auszug nicht. Somit ergibt sich an dieser Stelle eine geeignete Position, um eine Lochblende aufzunehmen.

Aus der Gebrauchsmusterschrift DE 20 2004 005 303 U1 geht ein Faltenbalg mit einem vorzugsweise geschlossenen Balgenkörper hervor, der von mindestens einem Führungsrahmen umgriffen ist, der mit dem Balgenkörper in Formschluss steht. Der Führungsrahmen ist flächig ausgebildet und weist mindestens eine Trennstelle auf, wobei die Trennstelle von mindestens einem an dem Führungsrahmen anliegenden, flächigen Verbindungselement übergriffen ist.

Die Patentschrift DE 101 37 803 B4 offenbart einen zylindrischen Laserschutzbalg mit um eine zentrale Längsachse umlaufend geschlossenem, gefaltetem Balgmaterial mit Innen- und Außenfalten sowie mit in den Außenfalten eingesetzten Metallblenden, die eine kreiszylindrische Blendenöffnung aufwciscn. Die Metallblenden sind dabei im Mittelbereich einer Faltenflanke, die Innen- und Außenfälte miteinander verbindet, angeordnet, da sich dort der Radius des Faltenbalgs bei Auszug nicht ändert (neutraler Durchmesser).

Nachteilig an dem aus dem Stand der Technik bekannten Schutzbälgen ist zum einen, dass der Aufbau jedes Faltenbalgssegments sehr aufwendig in Bezug auf Materialwahl (Textilstoff mit Kaschierung oder einzeln zusammengcklcbte Faltenbalgringe) realisiert wird, zum anderen die Anordnung der Aufnahmehalterung für die Lochblende innerhalb des Faltenbalgs eine größere konstruktive Anstrengung und komplizierte Arbeitsvorgänge notwendig macht. Insbesondere der komplexe Aufbau der bekannten Faltenbälge führt zu hohen Kosten bei der Montage und Wartung sowie zur Verwendung vieler Einzelteile, die die Gesamtkosten des Schutzbalgs in die Höhe treiben.

Ausgehend von diesem Stand der Technik ist es die Aufgabe der vorliegenden Erfindung, ein Schutzbalg insbesondere zur Laserstrahlführung zu schaffen, die aus nur einer geringen Anzahl von Einzelteilen besteht, eine sichere Halterung der Lochblende gewährleistet, eine gasdichte Abschirmung des inneren Raums gegenüber dem Außenraum ermöglicht, und dabei kostengünstig einfach und möglichst werkzc;ugfrei aufzubauen ist.

Diese Aufgabe wird durch einen Schutzbalg nach der Lehre des Patentanspruchs 1 gelöst.

Vorteilhafte Ausgestaltungen der Erfindung sind Gegenstand der Unteransprüche.

Der Schutzbalg gemäß der Erfindung besteht aus einer Aneinanderreihung einzelner Schutzbalgsegmente, wobei ein einzelnes Schutzbalgsegment ein im Wesentlichen zylindrisches Faltenbalgsegment, einen Führungsrahmen und mindestens eine Lochblende umfasst. Der Schutzbalg ist erfindungsgemäß dadurch gekennzeichnet, dass das Faltenbalgsegment einstückig aus einem flexiblen Faltenbalgmaterial hergestellt ist, wobei am Faltenbalgsegment an seinen beiden axialen Enden Verbindungselemente zum Verbinden mit benachbarten Faltenbalgsegmenten angeordnet sind, sowie an mindestens einem der beiden Enden Befestigungselemente zur Befestigung des Faltenbalgsegments mit dem Führungsrahmen angeordnet sind, und an mindestens einem der beiden Enden Aufnahmeelemente zur Aufnahme und I-Ialterung der Lochblende angeordnet sind. Mit anderen Worten besteht ein Schutzbalgsegment aus lediglich drei Grundbestandteilen: einem einstückigen Faltenbalgsegment, einem Führungsrahmen und einer Lochblende. Dabei ist das Faltenbalgsegment so ausgestattet, dass es mindestens an einem seiner beiden Enden Verbindungsmittel zum Verbinden des Faltenbalgsegment mit dem jeweils anschließenden Faltenbalgsegment aufweist, wiederum an einem der beiden Enden Befestigungselemente zur Befestigung mit dem Führungsrahmen aufweist, und wiederum an einem der beiden Enden Aufnahmeelemente zur Aufnahme und Halterung der Lochblende aufweist. Hieraus ergibt sich, dass an jedem Faltenbalgsegment mindestens eine Lochblende angebracht werden kann, und diese jeweils immer im Bereich des Führungsrahmens angeordnet ist. Hierbei ist es beliebig, ob an jeweils einem einzigen Ende des Faltenbalgsegments die Aufnahmevorrichtung für die Lochblende und die Befestigungselemente für den Führungsrahmen angeordnet sind, oder ob beispielsweise die Befestigungselemente für den Führungsrahmen an einem Ende des Faltenbalgsegments und die Aufnahmeelemente für die Lochblende am gegenüberliegenden anderen Ende des Faltenbalgsegments vorgesehen sind. Durch diesen einfachen Aufbau mit lediglich drei Grundkomponenten ist ein geringer Bauteilaufwand zur Schaffung eines Schutzbalgs gegeben, sodass ein Schutzbalg in wesentlich kürzerer Zeit kostengünstiger mit geringerem Materialaufwand und damit geringerer Herstellungs- und Montagezeit hergestellt werden kann.

Eine besonders vorteilhafte Ausgestaltung des Schutzbalgs ergibt sich dadurch, dass der Führungsrahmen und die Lochblende im Wesentlichen in einer Ebene angeordnet werden. Da Lochblende und Führungsrahmen im Bereich des axialen Endes eines Faltenbalgsegments anzuordnen sind, liegt es auf der Hand, dass sie in einer Ebene angeordnet werden können. Daraus ergibt sich der Vorteil, dass der Führungsrahmen die Aufnahme der Lochblende zusätzlich stabilisieren kann, und des Weiteren die Halterung des Faltenbalgs im Führungsrahmen von innen durch die Lochblende gestützt wird, sodass Führungsrahmen und Lochblende bei Anordnung in einer Ebene von innen und außen Kräfte auf die Anschlussstelle benachbarter Faltenbalgsegmente ausüben können und somit einer gasdichten Verbindung zwischen zwei benachbarten Faltenbalgsegmenten unterstützen.

Prinzipiell ist die Ausgestaltung der beiden axialen Enden jedes Faltenbalgsegments beliebig, es hat sich jedoch als besonders vorteilhaft herausgestellt, dass beide axiale Enden des Faltenbalgsegments als Endtüllen ausgeformt sind, an denen die Verbindungselemente, Befestigungselemente und Aufnahmeelemente angeordnet sind. Dies bedeutet, dass jedes Faltenbalgsegment nicht mit Berg- und/oder Talfalte endet, sondern an seinem Ende jeweils noch einen Ansatz, der als Tülle ausgeformt ist, aufweist. Diese Endtüllen ermöglichen das Anbringen geeigneter Verbindungs-, Befestigungs- und Aufnahmeelemente, um zum einen die Verbindung zweier benachbarter Faltenbalgsegmente herzustellen, zum anderen die Befestigung mit dem Führungsrahmen zu realisieren, und drittens die Möglichkeit zur Aufnahme und Halterung der Lochblende zu gewährleisten. Die Anordnung dieser Verbindungs-, Bcfestigungs-und Aufnahmeelementen an den Endtüllen, reduziert wiederum die Anzahl benötigter Einzelteile zum Zusammenbau des Schutzbalgs und erleichtert die Montage erheblich.

Grundsätzlich sind mehrere Verbindungsmöglichkeiten der Faltenbalgsegmente möglich. Eine nachfolgend beschriebene Möglichkeit basiert darauf, dass die Endtüllen der benachbarten Faltenbalgsegmente so ausgeformt sind, dass sie ineinander greifen und somit bereits einen Beitrag zur Verbindung leisten. Daneben oder ergänzend ist denkbar, dass besondere Verbindungs- und Befestigungsmittel an den Endtüllen zur Verbindung der Faltenbalgsegmente und Befestigung des Führungsrahmens angeordnet werden, diese Variante wird später in der Beschreibung erläutert.

Sind an den axialen Enden des Faltenbalgs Endtüllen vorgesehen, so liegt es auf der Hand, dass eine erste der beiden axialen Endtüllen des Faltenbalgs einen Innenradius aufweist, der ≥dem Außendurchmesser der zweiten der beiden axialen Endtüllen ist, sodass zwei benachbarte Faltenbalgsegmente durch Einstecken der zweiten Endtülle des zweiten Faltenbalgsegments in die erste Endtülle des benachbarten ersten Faltenbalgsegments miteinander verbunden werden können. Somit kann bei Ausbildung einer Endtülle größer als die anderen Endtülle jedes Faltenbalgsegments ein Ineinanderschieben benachbarter Faltenbalgsegmente ermöglicht werden, dies hat jedoch zur Folge, dass die Faltenbalgsegmente nicht mehr endensymmetrisch aufgebaut sind, und eine ausgewiesene Installations- oder Einbaurichtung aufweisen. Durch Einstecken einer Endtülle eines Faltenbalgsegments in die Endtülle des benachbarten Faltenbalgsegments kann eine gasdichte, sichere Verbindung zweier Faltenbalgsegmente geschaffen werden, so wird beispielsweise durch Anordnung der Lochblende innen und des Führungsrahmens außen an dieser Stoßstelle ein Pressdruck zwischen Lochblende und Führungsrahmen auf die ineinander gesteckten Endtüllen erzeugt, sodass die beiden Faltenbalgsegmente kraftschlüssig und gasdicht miteinander verbunden werden. Alternativ ist es beispielsweise auch denkbar, dass dieser Überlappungsbereich der beiden Faltenbalgsegmente mittels außen angelegter Schlauchschelle und innen angebrachter Lochblende als Gegendruckmittel gasdicht verbunden werden kann.

Bezüglich einer kraftschlüssigen Verbindung beider Faltenbalgsegmente hat es sich in der Praxis bewährt, dass die Verbindungselemente der beiden Endtüllen des Faltenbalgsegments mindestens eine im Innenmantel der ersten Endtülle umlaufende Verbindungslippe und mindestens einen am Außenmantel der zweiten Endtülle umlaufenden Verbindungsfalz umfassen, sodass die Verbindungslippe der ersten Endtülle eines ersten Faltenbalgsegments durch Einschnappen in den Verbindungsfalz der zweiten Endtülle eines zweiten benachbarten Faltenbalgsegments eine formschlüssige Verbindung herstellt. Eine solche Verbindung zweier benachbarter Faltenbalgsegmente mittels einer Verbindungslippe an der Endtülle des einen Faltenbalgsegments und einem Verbindungsfalz an dem entsprechenden anderen Ende des zweiten Faltenbalgsegments ermöglicht es beim Einschieben der größeren Endtülle in die kleinere Endtülle der beiden Faltenbalgsegmente eine bedingt kraftschlüssige Verbindung zu realisieren, da die Verbindungslippe in den Verbindungsfalz eingreift, und somit eine hakende Verbindung zwischen den beiden Faltenbalgsegmenten schafft. Dabei ist darauf hinzuweisen, dass die Verbindungslippe zum einen am Außenmantel der kleiner gestalteten Endtülle oder am Innenmantel der größer gestalteten Endtülle angeordnet werden kann, und dazu entsprechend der Verbindungsfalz am Außenmantel der kleineren oder am Innenmantel der größeren Endtülle angeordnet wird. Grundlegend ist dabei jedoch das Prinzip, dass eine Verbindungslippe einer Endtülle in einen Verbindungsfalz der jeweils anderen Endtülle eingreift, wenn die beiden Endtüllen mit unterschiedlichem Durchmesser ineinander geschoben sind. Eine solche Ausgestaltung der Verbindungselemente ermöglicht eine werkzeugfreie Verbindung zweier benachbarter Faltenbalgsegmente, wobei die Dichtwirkung vor allem durch eine innere des Faltenbalgs angeordnete Lochblende und einen von außen umgreifenden Führungsrahmen unterstützt wird.

Im Hinblick auf die Ausgestaltung der Befestigungselemente an der Endtülle des Faltenbalgsegments zur Befestigung des Faltenbalgsegments am Führungsrahmen hat es sich als besonders günstig erwiesen, dass die Befestigungselemente zur Befestigung des Faltenbalgsegments mit dem Führungsrahmen eine den Außenmantel der ersten Endtülle umlaufende Befestigungsnut umfassen, in die der Führungsrahmen formschlüssig eingreift. Hierbei ist die erste Endtülle die Endtülle mit dem jeweils größeren Innendurchmesser, die über die zweite Endtülle des benachbarten Faltenbalgsegments geschoben werden kann. Am Außenmantel dieser größeren ersten Endtülle kann vorteilhafter Weise eine umlaufende Befestigungsnut eingelassen sein, die dann als Aufnahme für einen meist dünnen plattenförmigen Führungsrahmen dient, der formschlüssig in die Befestigungsnut eingreift. Hierzu kann der Führungsrahmen durch umgreifen der Endtülle seinerseits Druck auf die Verbindungsstelle der beiden Faltenbalgsegmente ausüben, und die kraftschlüssige Verbindung und gasdichte Eigenschaft dieser, Verbindungsstelle verbessern.

Im Hinblick auf die oben skizzierte Ausführung der Befestigungselemente ist es besonders vorteilhaft, falls der Führungsrahmen eine im Wesentlichen kreisförmige Ausnehmung aufweist, deren Durchmesser im Wesentlichen kleiner gleich dem Durchmesser der Befestigungsnut ist. Durch eine solche kreisförmige Ausnehmung kann beispielsweise der Führungsrahmen einstückig hergestellt werden, und die erste Endtülle eines Faltenbalgsegments in den Führungsrahmen durch Einschnappen der Befestigungsnut in den Führungsrahmen befestigt werden. Wird dann beispielsweise das benachbarte Faltenbalgsegment in die erste eingeschnappte Endtülle hineingesteckt, und beispielsweise mit der oben angesprochenen Verbindungslippe und Verbindungsfalz gesichert, so ergibt sich eine Verbindung zweier Faltenbalgsegmente, die zudem mit einem Führungsrahmen verbunden ist und mit diesem entlang einer Führungsschiene ein- und ausgezogen werden kann. Hierzu ist es wie bereits oben angesprochen vorteilhaft, dass das Faltenbalgsegment durch formschlüssiges Einschnappen der Befestigungsnut in einer Ausnehmung des Führungsrahmens an diesem befestigt wird.

Alternativ zu einem möglichen einteiligen Aufbau eines Führungsrahmens ist es auch möglich und denkbar, dass der Führungsrahmen mehrteilig, insbesondere zweiteilig aufgebaut ist, und das Faltenbalgsegment mit dem Führungsrahmen dadurch verbunden wird, dass die einzelnen Teile des Führungsrahmens in die Befestigungsnut des Faltenbalgsegments eingeschoben und anschließend die Teile des Führungsrahmens insbesondere mit Führungsrahmenvcrbindungsmittel miteinander verbunden werden. Durch einen zweiteiligen Aufbau des Führungsrahmens kann der Führungsrahmen über die Verbindungsstelle der beiden Faltenbalgsegmente gestülpt werden, und durch Verbinden der beiden Teile, beispielsweise mit Führungsrahmenverbindungsmittel oder durch Überlappung der Einzelteile des Führungsrahmens und kraftschlüssige Verbindung der Einzelteile durch Nieten, Schrauben, Klebstoff, etc. die Verbindungselemente der beiden Faltenbalgsegmente so gegeneinander pressen, dass eine kraftschlüssige und gasdichte Verbindung zwischen den beiden Faltenbalgsegmenten entsteht. Hierbei kann gerade ein zweiteiliger Aufbau des Führungsrahmens die Montagezeit des Schutzbalgs deutlich verkürzen.

Wird der Führungsrahmen zwei- oder mehrteilig ausgeführt, so ist es besonders vorteilhaft, dass durch Anbringung der Führungsrahmenverbindungsmittel zur Verbindung der einzelnen Teile des Führungsrahmens der Gesamtverbund aus den beiden verbundenen Faltenbalgsegmenten, Lochblende und Führungsrahmen kraft- und formschlüssig fixiert und befestigt wird. Unter der Annahme, dass die Lochblende im Wesentlichen in der Ebene des Führungsrahmens liegt wird durch Überstülpen des Führungsrahmens über die beiden Endtüllen der Faltenbalgsegmente und Verbinden der beiden Teile des Führungsrahmens durch Führungsrahmenverbindungsmittel ein Druck des Führungsrahmens auf die Außenmantelfläche der ineinander geschobenen Endtüllen aufgebaut, der durch die Lochblende im Inneren des Endtüllen angeordnet ist aufgenommen werden kann. Durch den Druck zwischen Führungsrahmen und Lochblende werden dabei die Verbindungselemente der Faltenbalgsegmente so zusammengepresst, dass sie eine kraft- und formschlüssige Verbindung der verbundenen Faltenbalgsegmente sicherstellen, und dabei gasdicht den Schutzbalg abschließen. In diesem Fall sind die Führungsrahmenverbindungsmittel die wesentlichen Elemente des Zusammenbaus des Schutzbalgs, da sie an den Stoßstellen zweier Schutzbalgsegmente als einziges die Verbindung des Führungsrahmens herstellen müssen, um den Gesamtverbund benachbarter Schutzbalgsegmente kraftschlüssig, formschlüssig und gasdicht zu verbinden.

Wird der Führungsrahmen mehrteilig ausgeführt, so ist es besonders vorteilhaft und empfehlenswert, dass die einzelnen Teile des Führungsrahmens formschlüssig ineinander greifen und mittels Fixiernasen gegeneinander fixiert sind. So können an den Führungsrahmen einzelne Führungsnasenaus- und -einbuchtungen vorgesehen sein, sodass die Einzelteile des Führungsrahmens mit Hilfe dieser Fixiernasen ineinander greifen und eine passgenaue Verbindung der Einzelteile des Führungsrahmens ermöglichen. Somit kann die Montagezeit erheblich verkürzt sowie die Passgenauigkeit bei der Herstellung des Schutzbalgs erhöht werden.

Der Führungsrahmen dient dazu, den Schutzbalg innerhalb einer Führungsschiene beweglich zu führen. Dazu ist es vorteilhaft möglich, dass der Führungsrahmen eine Führungshalterung aufweist, um den Führungsrahmen an Führungsschienen verschieblich zu halten und zu führen. Die Führungshalterung kann dabei beliebig ausgeführt sein, in der Praxis hat es sich gezeigt, dass die Führungshalterung meist aus zwei umgreifenden Bügeln besteht, die entweder von innen in zwei Führungsgleitkanten einer Führungsschiene eingreifen, oder zwei Führungsgleitkanten von außen umgreifen. Es ist dabei möglich, dass die Führungshalterung von außen nur eine einzelne Führungsschiene, die zwei Führungsgleitkanten aufweist, umfasst. An der Führungshalterung können beispielsweise Gleitelemente angebracht sein, die die Gleit- und Abriebsfestigkeit des Führungsrahmens entlang der Führungsschiene verbessern.

Die Aufnahme der Lochblende innerhalb des Schutzbalgs kann beliebig ausgeführt sein. Konsequent zu den obigen Ausführungen bezüglich der Befestigungselemente an den Führungsrahmen ist es vorteilhaft möglich, dass die Aufnahmeelemente zur Aufnahme und Halterung der Lochblende eine den Innenmantel der zweiten Endtülle umlaufende Aufnahmenut umfassen. Dabei ist die zweite Endtülle die Endtülle, die den kleineren Außendurchmesser und kleineren Innendurchmesser aufweist, und die in die erste Endtülle eines benachbarten Faltenbalgsegmentes gesteckt wird.

Sofern diese zweite Endtülle eine innen umlaufende Aufnahmenut umfasst, kann die Lochblende, die in den meisten Fällen als kreisförmige Scheibe mit Blendenloch ausgeführt ist, in diese Aufnahmenut aufgenommen und gelagert werden. Mit solch ausgestalteten Aufnahmeelementen ist es beispielsweise möglich, die Lochblende in die Aufnahmenut der zweiten Endtülle einzuklippsen, dann die zweite Endtülle in die erste Endtülle einzustecken, wobei die erste Endtülle sich mit der zweiten Endtülle durch die Verbindungslippe und den Verbindungsfalz verbinden, und dann den zweiteiligen Führungsrahmen über die Führungsnut zu stülpen und mit Hilfe der Führungsrahmenverbindungsmittel zu befestigen, sodass die Einheit aus Führungsrahmen, zusammen geschobenen Endtüllen und innen, liegender Lochblende eine stabile Verbindung zweier benachbarter Schutzbalgsegmente ergibt.

Hierzu ist es besonders vorteilhaft, dass die kreisförmige Lochblende einen Innendurchmesser aufweist, der im Wesentlichen größer gleich dem Durchmesser der Aufnahmenut ist, sodass die Lochblende in die Aufnahmenut herausfallsicher eingeschnappt werden kann, da das Faltenbalgmaterial in der Regel aus einem elastischen, flexiblen Material besteht.

Grundsätzlich ist die relative Lage der Befestigungsnut zur Befestigung des Faltenbalgsegments an dem Führungsrahmen zur Aufnahmenut zur Halterung und Aufnahme der Lochblende beliebig. Jedoch ist es, wie bereits oben mehrfach angedeutet, besonders vorteilhaft und empfchlenswert, dass im verbundenen Zustand zweier Faltenbalgsegmente die umlaufende Befestigungsnut der ersten Endtülle des ersten Faltenbalgsegments im Wesentlichen in der Ebene der umlaufenden Aufnahmenut der zweiten Endtülle des zweiten Faltenbalgsegments liegt, sodass die in der Aufnahmenut der zweiten Endtülle des zweiten Faltenbalgsegments aufgenommene Lochblende im Wesentlichen in der gleichen Ebene wie der in der Befestigungsnut der ersten Endtülle des ersten Faltenbalgsegments befestigte Führungsrahmen liegt. Mit anderen Worten ist es erstrebenswert, dass die Aufnahmenut, die sich auf der Außenmantelfläche der ersten Endtülle befindet, im eingeschobenen Zustand von erster und zweiter Endtülle in der gleichen Ebene wie die im Innenmantel der zweiten Endtülle vorgesehene Aufnahmenut der Lochblende liegt. Somit bildet Führungsrahmen und Lochblende eine gemeinsame Ebene, und umfassen bzw. füllen die Verbindungsstelle zweier benachbarter Faltenbalgsegmente so aus, sodass der Druck, der von dem Führungsrahmen auf die Verbindungsstelle ausgeübt wird, von der innen liegenden Lochblende aufgenommen werden kann. Somit führt eine solche Anordnung der Aufnahme- und Befestigungselemente zu einer besonders kraftschlüssigen, formschlüssigen und gasdichten Verbindung zweier benachbarter Schutzbalgsegmente.

Nachdem vorangehend eine Verbindung der Faltenbalgsegmente mittels besonders dafür ausgeformter Endtüllen im Vordergrund stand, wird nachfolgend eine alternative Variante mittels einer gesonderten Verbindungsbefestigungsblende vorgestellt.

Für den Fall eines gleichartigen Aufbaus der beiden Enden eines Faltenbalgsegments liegt es nahe, eine gesonderte Verbindungsbefestigungsblende zur Verbindung benachbarter Faltenbalgsegmente und Befestigung der Faltenbalgsegmente mit einem Führungsrahmen heranzuziehen. Dies hat insbesondere den Vorteil, dass die beiden Enden jedes Faltebalgsegments identisch aufgebaut sein können, und die Endtülle geometrisch einfach ausgestaltet werden kann, was wiederum Herstellung-, Montagezeit und -kosten spart.

Vorzugsweise besteht die Verbindungsbefestigungsblende im Wesentlichen aus einem Blendenring und zwei Außenflanken. Dabei umgreifen die beiden Flanken die Endtüllen der beiden benachbarten Faltenbalgsegmente, wobei im Bereich des Blendenrings zwischen den beiden Endtüllen die Ausnehmung des Führungsrahmens eingreift. Somit übernimmt die Verbindungsbefestigungsblende die Funktion eines Verbindungselements und eines Befestigungselements und kann darüber hinaus die Funktion einer Lochblende übernehmen.

Es ist dabei vorteilhaft, dass die Verbindungsbefestigungsblende aus einem elastischen Material, insbesondere Kunststoff besteht. Durch Ausbildung der Verbindungsbefestigungsblcnde aus Kunststoff erhält diese elastische Eigenschaften, die insbesondere beim Einbringen der Verbindungsbefestigungsblende in die Verbindungsstelle zwischen zwei benachbarten Faltenbalgsegmenten eine einfache und gegebenenfalls werkzeugfreie Montage ermöglicht.

Grundsätzlich ist der Aufbau der Verbindungsbefestigungsblende beliebig. Vorzugsweise ist die Verbindungsbefestigungsblende zweiteilig aufgebaut, und umfasst eine Außen- und eine Innenblende. Durch das passgenaue Zusammenstecken von Außenblendenring über Innenblendenring ergibt sich eine Verbindungsbefestigungsblende, wobei die Außenblendenflanke der Außenblende und die Innenblendenflanke der Innenblende die beiden Endtüllen der benachbarten Falkenbalgsegmente sowie die dazwischen angeordnete Ausnehmung des Führungsrahmens klemmt und somit die Verbindung bzw. Befestigung realisiert. Hierdurch ist eine besonders einfache Montage des Schutzbalgs möglich.

Ist die Verbindungsbefestigungsblende zweiteilige aufgebaut, so liegt es nahe, dass Außenblende und Innenblende durch eine Schnapp-RastVerbindung miteinander verbunden werden können. Dies ermöglicht eine werkzeugfreie und schnelle Montage.

Davon abweichend ist bei einer zweiteiligen Ausführung der Verbindungsbefestigungsblende auch eine Verbindung von Außenblende mit Innenblende durch Verkleben, Verschweißen oder ähnliches denkbar.

Davon abweichend kann die Verbindungsbefestigungsblende vorteilhafterweise auch einteilig aufgebaut sein. Dies senkt zum einen die Herstellungskosten und die Anzahl der Bauteilkomponenten, und entbehrt eine zusätzliche Verbindung der Einzelteile der Verbindungsbefestigungsblende.

Die Außenflanken der Verbindungsbefestigungsblende erfüllen in diesem Ausführungsbeispiel die Hauptaufgabe der Verbindung und Befestigung. Zur Erhöhung der Verbindungs- und Befestigungssicherheit ist es vorteilhaft möglich, dass die Blendenflanken nach innen gerichtete umlaufende Eingriffskanten aufweisen, die in die Endtüllen der Faltenbalgsegmente eingreifen. Mithilfe solcher Eingriffskanten werden insbesondere bei hohen dynamischen Lasten bei Ein- und Auszug des Schutzbalgs die Verbindungssicherheit der Faltenbalgsegmente erhöht.

Anschließend an die oben vorgestellte Möglichkeit der Verbindungsbefestigungsblende umfasst diese mindestens ein Aufnahmeelement zur Aufnahme und Halterung einer Lochblende. Alternativ hierzu ist es ebenfalls vorteilhaft möglich, dass die Verbindungsbefestigungsblende die Funktionen der Lochblende übernimmt. Somit wird die Funktion einer Lochblende zu einer Verbindungsbefestigungsblende erweitert und dadurch Material, Montageaufwand und Zeit gespart.

Grundsätzlich ist das Material, aus dem die Faltenbalgsegmente bestehen, beliebig. Jedoch ist es besonders vorteilhaft, falls die Faltenbalgsegmente aus einem gasdichten, elastischen und flexiblen Material, bevorzugt aus CR (Chlorbutadien-Kautschuk) hergestellt sind. Gerade diese Materialien besitzen eine hohe Verschleißfestigkeit, eine hohe Flexibilität und eignen sich hervorragend zur Herstellung von Faltenbalgsegmenten. Bezüglich der Betriebssicherheit ist dabei eine Selbstlöschwirkung des Materials zu bevorzugen. Insbesondere ist es vorteilhaft und teilweise eine Grundanforderung an das Material des Schutzbalgs, dass es der Industrie-Materialnorm UL94-VO entspricht.

Der erfinderische Schutzbalg kann insbesondere zur Abdeckung und zum Schutz eines Laserstrahls verwendet werden. In diesem Fall sollte jedoch die Inneratmosphärc des Schutzbalgs gewissen Anforderungen genügen, so z.B. einer hohen Reinheit. Um dies zu Gewährleisten werden solche Schutzbälge in der Regel gasdicht ausgeführt. Daher ist es eine grundsätzliche Anforderung an die Verbindungselemente zweier benachbarter Schutzbalgsegmente, dass die Verbindung benachbarter Faltenbalgsegmente mit befestigten Führungsrahmen und aufgenommener Lochblende gasdicht ist. Diese gasdichte Wirkung kann beispielsweise auch durch den Einsatz von zusätzlichen Dichtmitteln zum Beispiel Klebern oder zusätzlichen Verbindungs- und Befestigungsmitteln realisiert werden.

Es besteht die Notwendigkeit, dass die Winkellage der einzelnen Führungsrahmen bezüglich der Längsachse des Schutzbalgs gleich ist. Um eine einfache und schnelle Montage des Schutzbalgs zu ermöglichen bietet es sich vorteilhaft an, dass Positionierungshilfen am Führungsrahmen und/oder am Faltenbalgsegment angebracht sind, mit deren Hilfe eine gleiche Winkelausrichtung der Führungsrahmen gegenüber der Längsachse des Schutzbalgs erleichtert wird. Eine solche Positionierungshilfe kann beispielsweise aus einer oder mehreren Positionicrungsnasen bestehen, die formschlüssig in Aussparungen des jeweiligen Gegenstücks eingreifen. So kann beispielsweise eine Positionierungsnase in der Befestigungsnut eines Faltenbalgsegments vorgesehen sein, die in einen Positionicrungsschlitz am Umfang der Führungsrahmenausnehmung eintaucht.

Im Folgenden wird die Erfindung anhand lediglich Ausführungsbeispiele zeigender Zeichnungen näher erläutert.

Es zeigt:
- **Fig. 1**: in schematisch perspektivischer Darstellung ein Schutzbalg des Stands der Technik;
- **Fig. 2**: in schematischer Darstellung einen Führungsrahmen eines Schutzbalgs des Stands der Technik;
- **Fig. 3**: in aufgebrochener schematischer Darstellung ein Faltenbalgsegment des Stands der Technik
- **Fig. 4**: in schematischer Darstellung einen Schnitt durch einen Abschnitt eines rotationssymmetrischen Faltenbalgsegments des Stands der Technik;
- **Fig. 5**: in schematischer aufgebrochener perspektivischer Darstellung ein Faltenbalgsegment eines ersten Ausführungsbeispiels;
- **Fig. 6**: in schematischer Schnittdarstellung eine rotationssymmetrische Verbindungsstelle zweier benachbarter Faltenbalgsegmente des ersten Ausführungsbeispiels;
- **Fig. 7**: einen vergrößerten Ausschnittsbereich A der **Fig. 6** einer Verbindungsstelle zwischen benachbarten Faltenbalgsegmenten des ersten Ausführungsbeispiels;
- **Fig. 8**: in perspektivischer schematischer Darstellung einen Führungsrahmen eines Ausführungsbeispiels eines Schutzbalgs;
- **Fig. 9**: in schematischer aufgebrochener perspektivischer Darstellung zwei verbundene Faltenbalgsegmente des ersten Ausführungsbeispiels;
- **Fig. 10**: in schematisch perspektivischer Darstellung die in Fig. 9 dargestellten verbundenen Faltenbalgsegmente mit Führungsrahmen eines Ausführungsbeispiels;
- **Fig. 11**: in schematisch perspektivischer Darstellung ein Schutzbalg mit Führungsschiene eines Ausführungsbeispiels;
- **Fig. 12**: in schematischer perspektivischer aufgebrochener Darstellung den in **Fig. 11** gezeigten Schutzbalg mit Führungsschiene;
- **Fig. 13**: in perspektivischer Schnitttdarstellung den Aufbau einer zweiteiligen Verbindungsbefestigungsblende eines zweiten Ausführungsbeispiels;
- **Fig. 14**: in perspektivischer aufgeschnittener Darstellung ein Faltenbalgsegment eines zweiten und dritten Ausführungsbeispiels;
- **Fig. 15**: in perspektivischer aufgeschnittener Darstellung eine Aneinanderreihung zweier Faltenbalgsegment des zweiten Ausführungsbeispiels;
- **Fig. 16**: in perspektivischer Schnittdarstellung den Aufbau einer einteiligen Verbindungsbefestigungsblende eines dritten Ausführungsbeispiels
- **Fig. 17**: in perspektivischer aufgeschnittener Darstellung ein Faltenbalgsegment eines dritten Ausführungsbeispiels mit Verbindungsbefestigungsblende;
- **Fig. 18**: in perspektivischer aufgeschnittener und vergrößerter Darstellung den Verbindungsbereich zweier benachbarter Faltenbalgsegment des dritten Ausführungsbeispiels;
- **Fig. 19**: in perspektivischer aufgeschnittener und vergrößerter Darstellung den Verbindungsbereich zweier benachbarter Faltenbalgsegment mit Führungsrahmen des dritten Ausführungsbeispiels;
den Aufbau einer zweiteiligen Verbindungsbefestigungsblende eines zweiten Ausführungsbeispiels;

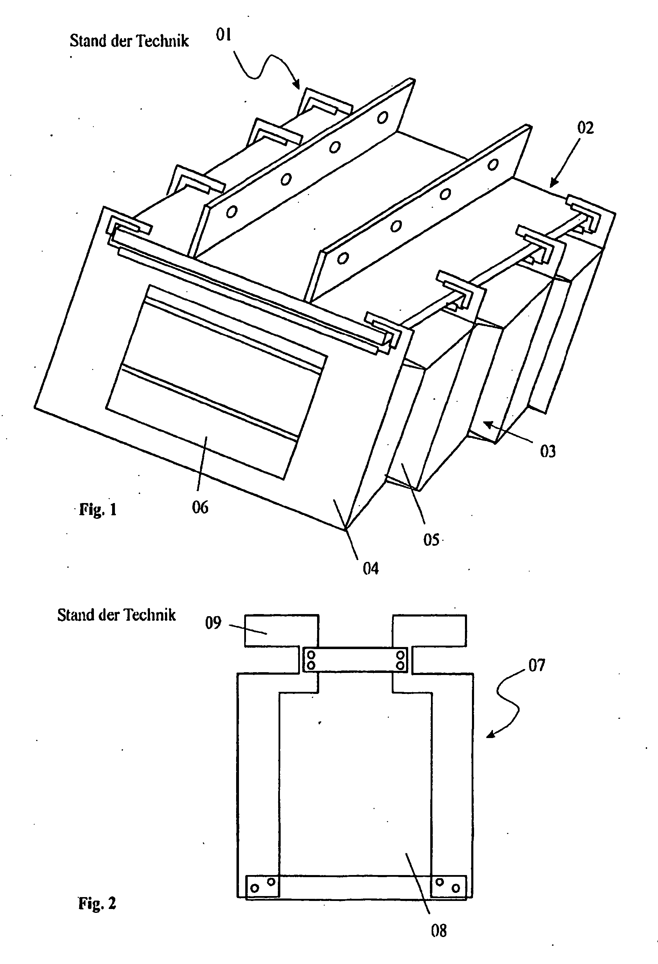

In **Fig. 1** ist in schematisch perspektivischer Darstellung eine konventionelle Ausführung eines Schutzbalgs 03 entsprechend dem Stand der Technik dargestellt. Das Schutzbalgsystem 01 nach dem Stand der Technik umfasst eine Führungsschiene 02, die aus einer Führungsplatte und zwei oben angebrachten Halteschienen besteht, und in der die Führungsrahmen 04 des Schutzbalgs 03 mittels Führungsrahmenhalterungen befestigt ist. Der Schutzbalg 03 besteht aus Faltenbalgsegmenten 05, die die einzelnen Führungsrahmen 04 verbinden. Dabei sind sowohl der Führungsrahmen als auch die Schutzbalgsegmente 05 rechteckförmig gestaltet. Der rechteckige Führungsrahmen 04 weist eine rechteckige Lochblende 06 aus. Am Führungsrahmen 04 sind im Bereich der Führungsrahmenhalterungen Gleitschienen angebracht, die das Gleiten des Führungsrahmens entlang der Führungsschiene 02 erleichtern. Die Befestigung der Faltenbalgsegmente 05 an den Führungsrahmen 04 geschieht üblicherweise über aufwendige Befestigungstechniken, wie beispielsweise kleben, nieten, schrauben o. ä.. Bei einer Beschädigung von Führungsrahmen 04 oder Faltenbalgsegmenten 05 muss in der Regel der gesamte Schutzbalg 01 ausgewechselt werden, da der selektive Austausch oder Reparatur einzelner Faltenbalgsegmente 05 oder Führungsrahmen 04 bisher nicht möglich war.

**Fig. 2** zeigt den gewöhnlichen Aufbau eines Führungsrahmens 07 nach dem Stand der Technik, der eine rechteckige Kontur aufweist. Der Führungsrahmen 04 besteht dabei aus vier Einzelteilen, die mittels Führungsrahmenverbindungsmittel - in diesem Fall Nieten - verbunden sind. Hierbei weisen die beiden seitlichen Führungsrahmenteile Führungshalterungen 09 auf, die mit Gleitschienen bewehrt werden können, und in Führungsschienen in dem gezeigten Beispiel in eine im Wesentlichen U-förmig ausgestaltete Führungsschiene mit Hilfe der Führungshalterungen von Innen eingreifen können.

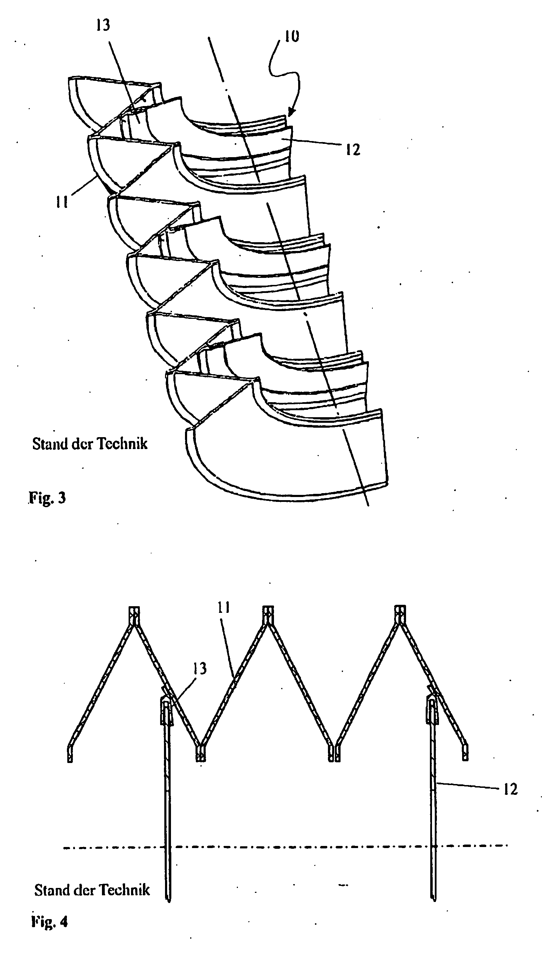

**Fig. 3** zeigt in einer perspektivisch schematischen Schnittdarstellung einen Bereich eines Faltenbalgsegments 10 nach dem Stand der Technik dar. Das Faltenbalgsegment 10 besteht dabei aus einzelnen hintereinander angeordneten Falten 11, die zickzackförmig miteinander verbunden sind, und die in der Mitte ihrer Flanke ein Aufnahmeelement 13 für eine Lochblende 12 aufweisen. Somit kann in jeder Falte 11 des Faltenbalgsegments 10 eine Lochblende 12 aufgenommen werden. Die Anordnung des Aufnahmeelements 13 der Lochblende 12 jeweils in der Mitte der Flanke einer Falte 11 gewährleistet einen konstanten Radius des Aufnahmeelements 13, der sich auch beim Ein- und Ausfahren des Faltenbalgsegments 10 nicht verändert.

**Fig. 4** stellt in Schnittdarstellung einen 2D-Teilbereich des in **Fig. 3** dargestellten Faltenbalgsegments 10 dar, der aufgrund seiner Rotationssymmetrie nur zur Hälfte dargestellt ist. In der Mitte einer Flanke einer Falte 11 ist ein Aufnahmeelement 13 einer Lochblende 12 angeordnet, das eine scheibenförmige Lochblende 12, die einen großen Außen- und einen kleinen Innenradius aufweist, aufnehmen kann. Durch die Anordnung des Aufnahmeelements der Lochblende 13 in der Mitte einer Flanke einer Falte 11 ermöglicht einen konstanten Radius des Aufnahmeelements selbst bei extremen Ein- und Auszug des Faltenbalgsegments, sodass die Lochblende 12 einen festen und sicheren Halt in jeder Auszugssituation des Faltenbalgs 10 findet.

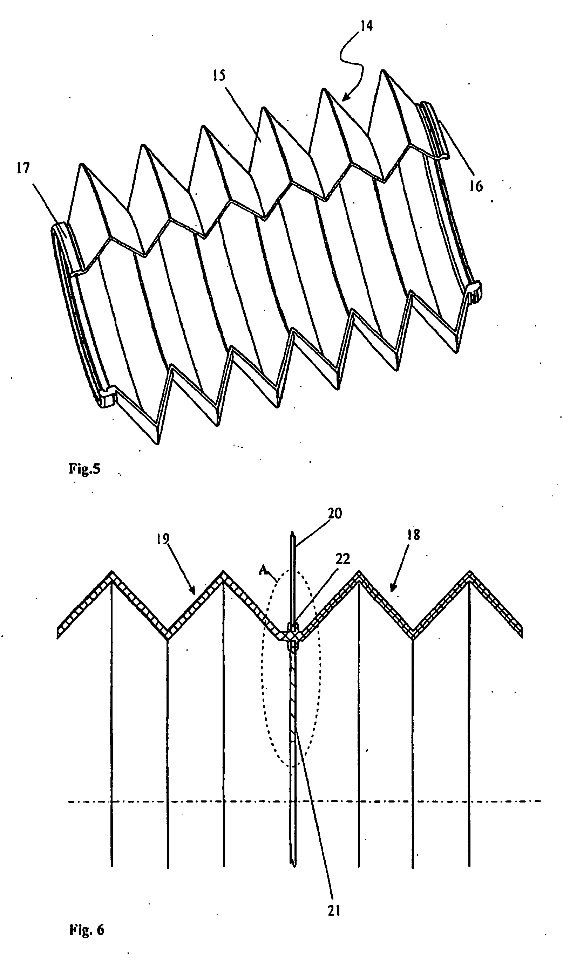

Die schematisch perspektivischer Darstellung eines aufgeschnitten Faltenbalgsegments 14 der **Fig. 5** zeigt eine erste Ausführungsform eines erfindungsgemäßen Faltenbalgsegments. Das Faltenbalgsegment 14 umfasst dabei sechs Falten 15 und wird an seinen axialen Enden von einer ersten Endtülle 17 und einer zweiten Endtülle 16 begrenzt. Die beiden Endtüllen 16 und 17 des Faltenbalgsegments 14 weisen dabei Verbindungs-, Aufnahme- und Befestigungselemente auf. Dabei ist besonders beachtlich, dass der Außenradius der zweiten Endtülle 16 gleich dem Innenradius der ersten Endtülle 17 ist, sodass die zweite Endtülle 16 in die erste Endtülle 17 eines benachbarten baugleichen Faltenbalgs 14 eingeschoben werden kann, wobei ein Verbindungsfalz der zweiten Endtülle 16 in eine Verbindungslippe der ersten Endtülle 17 einrasten kann.

In **Fig. 6** ist in schematischer Schnittdarstellung der Verbindungsbereich zweier Faltenbalgsegmente 18 und 19 des ersten Ausführungsbeispiels dargestellt. Hierbei ist ein erstes Faltenbalgsegment 18 an ein zweites Faltenbalgsegment 19 angeschlossen, in dem sich die beiden Endtüllen der beiden Faltenbalgsegmente 18 und 19 überlappen und deren Verbindungselemente 22 eine gasdichte, kraft- und formschlüssige Verbindung herstellen. Im Bereich der Endtüllen befindet sich auch eine Aufnahmevorrichtung für eine Lochblende 21 und Befestigungselemente zur Befestigung an einen Führungsrahmen 20, die beide ebenfalls in die Verbindungs-/Befestigungs-/Aufnahmeelemente 22 eingreifen. In **Fig. 6** ist der Überlappungsbereich als Detailbereich A markiert.

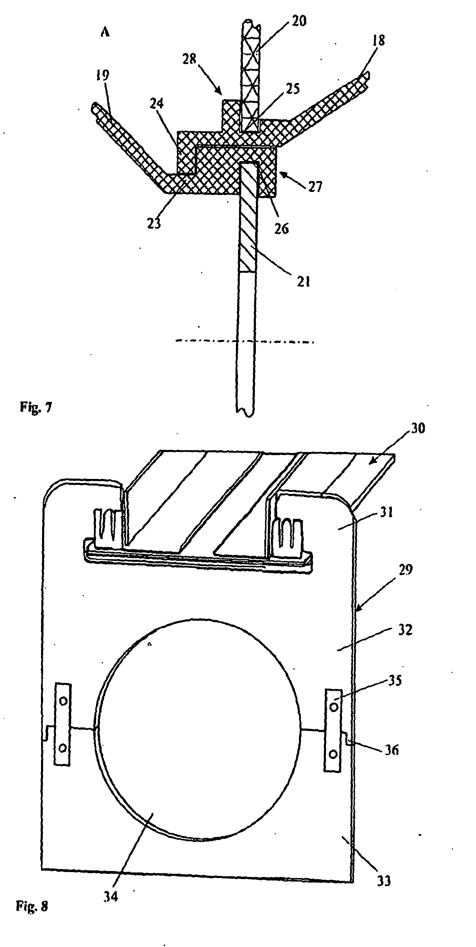

Der Detailbereich A der **Fig. 6** ist in der **Fig. 7** vergrößert dargestellt. Deutlich ist zu erkennen, wie die Verbindungselemente der ersten Endtülle 28 in die Verbindungselemente der zweiten Endtülle 27 der beiden benachbarten Faltenbalgsegmente 18 und 19 eingreifen. Hierbei weist die erste Endtülle 28 einen Innenradius auf, der gleich dem Außenradius der zweiten Endtülle 27 ist. Die erste Endtülle 28 umfasst dabei eine Verbindungslippe 24, die in einen Verbindungsfalz 23 der zweiten Endtülle 27 eingreift. Die zweite Endtülle 27 des zweiten Faltenbalgsegments 19 umfasst des Weiteren eine Aufnahmenut 26 zur Aufnahme und Halterung einer kreisförmigen Lochblende 21, die mit ihrem Außenmantel in die Aufnahmenut 26 der zweiten Endtülle 27 eingreift. Die erste Endtülle 28 des ersten Faltenbalgsegments 18 umfasst eine Befestigungsnut 25, in der ein Führungsrahmen 20 form- und kraftschlüssig eingreift. Hierbei ist die Befestigungsnut 25 der ersten Endtülle 28 in der gleichen Ebene wie die Aufnahmenut 26 der zweiten Endtülle 27 angeordnet, sodass der Gesamtverbund aus Führungsrahmen 20, Befestigungsnut 25 der ersten Endtülle 28, Aufnahmenut 26 der zweiten Endtülle 27, und Lochblende 21 in einer Ebene angeordnet ist, sodass durch Verbindungspressdruck des Führungsrahmens 20 dieser Druck direkt auf die Lochblende 21 übergeleitet wird, und somit die Verbindungselemente 24 und 23 der beiden Faltenbalgsegmente 18 und 19 wirkungsvoll bei der Schaffung einer gasdichten kraft- und zugübertragenden Verbindung der beiden benachbarten Faltenbalgsegmente 18 und 19 unterstützt.

**Fig. 8** zeigt in einer schematisch perspektivischen Darstellung eine mögliche Ausführungsform eines erfindungsgemäßen Führungsrahmens 29. Der Führungsrahmen 29 besteht dabei aus einem Oberteil 32 und einem Unterteil 33, die in einem zusammengeschobenen Zustand dargestellt sind. Dabei weist das Oberteil 32 zur leichteren Befestigung Fixiernasen 36 auf und kann formschlüssig in das Unterteil 33 des Führungsrahmens geschoben werden. Im zusammengeschobenen Zustand der beiden Ober- und Unterteile 32 und 33 des Führungsrahmens 29 entsteht eine kreisförmige Führungsrahmenausnehmung 34, in die beispielsweise die Befestigungsnut 25 dc;r ersten Endtülle 28 der Fig. 7 eingreifen kann, sodass durch kraftschlüssige Verbindung von Ober- und Unterteil des Führungsrahmens 29 durch Führungsrahmenverbindungsmittel 35 Druck auf die Verbindungsstelle zweier benachbarter Faltenbalgsegmente 18 und 19 ausgeübt werden kann. Der Führungsrahmen 29 umfasst des Weiteren zwei Führungshalterungen 31, die klammerartig von außen eine Führungsschiene 30 umklammern, wobei die Führungshalterung 31 mit Gleitschienenelementen zur leichteren Beweglichkeit und erhöhten Abriebsfestigkeit bewehrt sind.

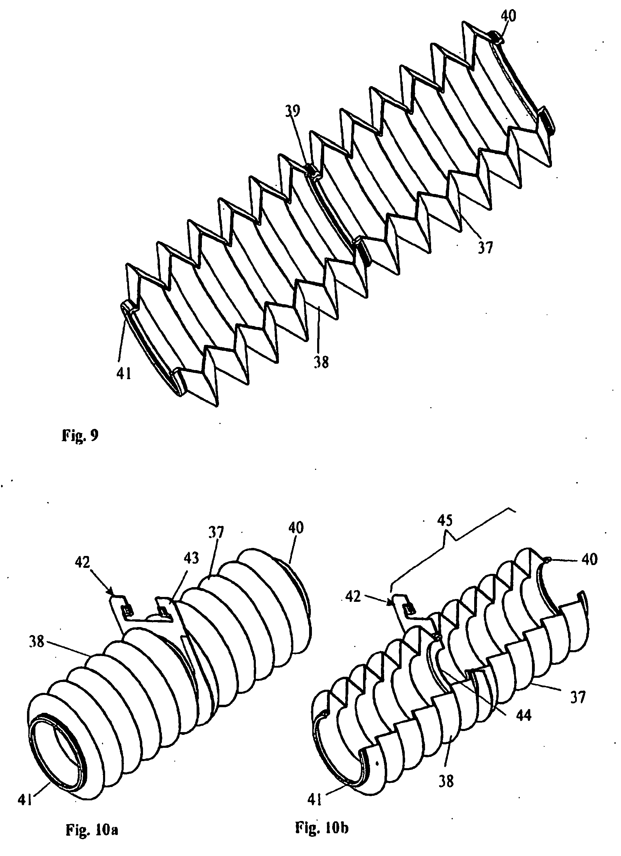

In der **Fig. 9** ist in einer schematisch perspektivischen und aufgebrochenen Darstellung die Verbindung zweier Faltenbalgsegmente 37 und 38 des ersten Ausführungsbeispiels dargestellt. Die erste Endtülle des Faltenbalgsegments 38 ist dabei über die zweite Endtülle des Faltenbalgsegments 37 geschoben, sodass an dieser Stelle die Verbindungselemente der beiden Endtüllen überlappen und ein Verbindungs-/Befestigungs/Aufnahmeelementbereich 39 entsteht, der beispielsweise den in **Fig 7** dargestellten Aufbau besitzen kann. Im Außenumfang der Endtülle des ersten Faltenbalgsegments 38 ist eine umlaufende Befestigungsnut vorgesehen, in dem ein Führungsrahmen kraft- und formschlüssig eingreifen kann, und im Innenmantelbereich der zweiten Endtülle des zweiten Faltenbalgsegments 37 ist eine Aufnahmehalterung für eine Lochblende vorgesehen. An den axialen Enden der beiden verbundenen Faltenbalgsegmente 37 und 38 ist wiederum eine erste Endtülle 40 und eine zweite Endtülle 41 angeordnet, sodass weitere Faltenbalgsegmente an die bereits verbundenen Faltenbalgsegmente angeschlossen werden können.

**Fig. 10** zeigt in einer Erweiterung der in **Fig. 9** dargestellten Konfiguration die beiden Faltenbalgsegmente 37 und 38, an deren Verbindungs/Befestigungs-/Aufnahmeelemente 39 ein Führungsrahmen 42, der beispielsweise den in **Fig. 8** dargestellten Führungsrahmen entsprechen kann, angebracht ist. Somit ist dieses aus zwei Faltenbalgsegmenten bestehende Schutzbalgsegment zum Einbau vorbereitet, und kann beispielsweise an einen bestehenden Schutzbalg angebracht werden. **Fig. 10a** zeigt dabei die oben beschriebene Konfiguration im Gesamtzustand, während **Fig. 10b** eine aufgebrochene Darstellung bietet, in der in das Innere des Schutzbalgsegments 45 hineingeblickt werden kann. Insbesondere kann dabei die Lage der Lochblende 44 die in dem Aufnahmeelement der Verbindungs-/Befestigungs-/Aufnahmeelemente 39 aufgenommen und gehalten wird, erkannt werden.

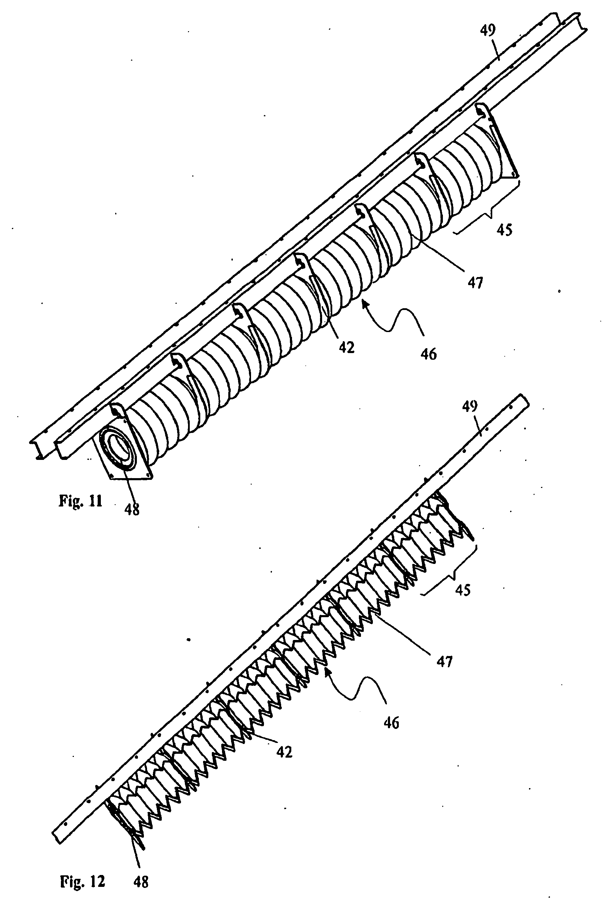

**Fig. 11** zeigt in einer perspektivischen schematischen Darstellung einen gesamten Schutzbalg 46 eines Ausführungsbeispiels, der aus einzelnen Schutzbalgsegmenten 45 besteht. Der Schutzbalg 46 umfasst in der dargestellten Konfiguration sechs Schutzbalgsegmente 45, wobei jedes Schutzbalgsegment 45 aus einem Führungsrahmen 42, einem Faltenbalgsegment 45 und einer Lochblende 48 besteht. Die Führungsrahmen 42 sind in doppelpaarigen Führungsschienen 49 eingehängt und verschieblich verfahrbar.

**Fig. 12** zeigt den in **Fig. 11** dargestellten Schutzbalg 46 in aufgebrochener Darstellung, und lässt den Blick in das Innere des Schutzbalgs 46 frei. Der aus sechs Schutzbalgsegmenten 45 bestehende Schutzbalg 46 umfasst dabei Faltenbalgsegmente 47, Führungsrahmen 42 und Lochblenden 48. Dabei ist in **Fig. 12** eine der beiden Führungsschienen 49 zu sehen.

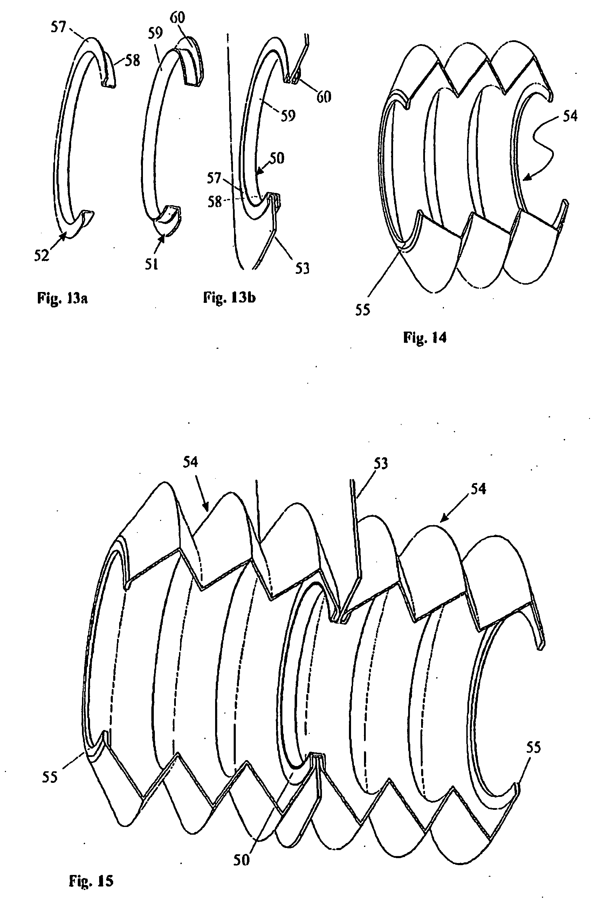

In **Fig.13** ist eine zweiteilige Ausführung einer Verbindungsbefestigungsblende eines zweiten Ausführungsbeispiels dargestellt. Gemäß der **Fig. 13a** besteht eine zweiteilige Verbindungsbefestigungsblende 50 aus einer Außenblende 51 und einer Innenblende 52. Jedes dieser beiden Teilblenden 51, 52 umfasst einen Blendenring 58 bzw. 59 und eine Blendendenflanke 57 bzw. 60. Dabei sind Außenblende 52 und Innenblende 51 formidentisch aufgebaut, jedoch weist die Außenblende 52 einen Innenradius des Blendenrings 58 auf, der dem Außenradius des Blendenrings 59 der Innenblende 51 im Wesentlichen entspricht. Somit kann der Außenblendenring 58 über den Innenblendenring 59 geschoben werden, sodass sich durch Zusammenschieben von Außenblende 52 und Innenblende 51 die Verbindungsbefestigungsblende 50, wie in **Fig. 13b** dargestellt, ergibt.

In **Fig. 14** ist in aufgeschnittener perspektivischer Darstellung ein Faltenbalgsegment 54 einer zweiten und dritten Ausführungsform dargestellt. Das Faltenbalgsegment 54 besteht aus 3 Falten und ist an seinen beiden axialen Enden durch zwei Endtüllen 55 begrenzt. Die Endtüllen 55 sind dabei im Gegensatz zu dem in **Fig.5** dargestellten Faltenbalgsegment 14 identisch ausgeformt, sodass der Faltenbalg 54 keine Vorzugsrichtung besitzt. Die Breite der Blendenringe 58,59 der Verbindungsbefestigungsblende 50 ist so gewählt, dass zwischen den beiden Außenflanken 57, 60 zwei Endtüllen 55 benachbarter Faltenbalgsegmente 55 und die Breite des Rands der Ausnehmung eines Führungsrahmens 53 eingreifen können. Die Verbindung zweier benachbarter Faltenbalgsegmente 54 und die Befestigung mit einen Führungsrahmen 53 erfolgt dadurch, dass sowohl Innen- 51 als auch Außenblende 52 durch eine der beiden benachbarten Endtüllen 55 und die sich dazwischen befindliche Ausnehmung des Führungsrahmens 53 gesteckt werden, sodass sich die beiden Teilblenden 51, 52 durch Verrasten, Verkleben oder sonstige Verbindungstechniken zur Verbindungsbefestigungsblende 50 vereinen.

In **Fig. 15** ist der Verbindungsbereich zweier Faltenbalgsegmente 54 perspektivisch im Detail dargestellt. Dabei ist zwischen den beiden Endtüllen 55 der benachbarten Faltenbalgsegmente 54 ein Führungsrahmen 53 angeordnet. Die Flanken 57, 60 der beiden ineinandergeschobenen Blendenteile 51,52 der Verbindungsbefestigungsblende 50 umgreifen die beiden Endtüllen 55 der benachbarten Faltenbalgsegmente 54 mit der dazwischen liegenden Ausnehmung des Führungsrahmens 53, und verbinden somit die beiden Faltenbalgsegmente 54 und befestigten diese an dem Führungsrahmen 53.

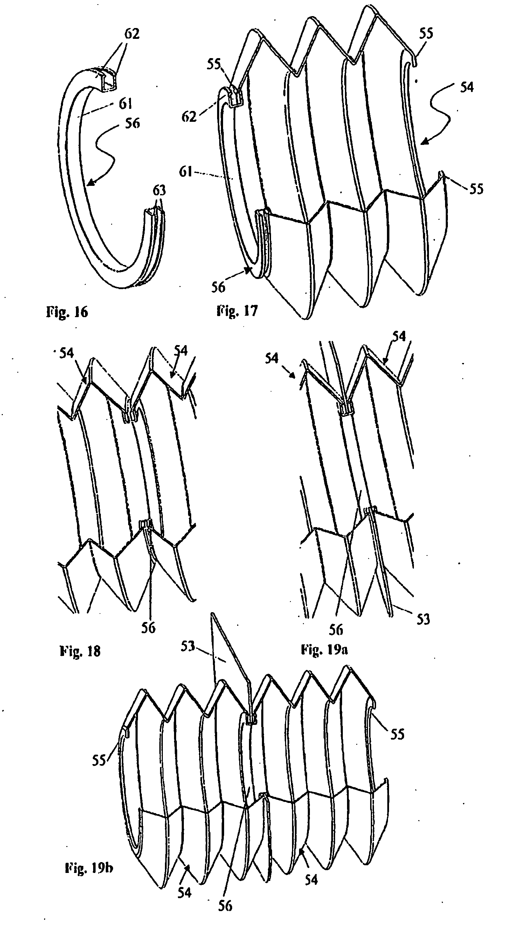

Nachfolgend wird die Darstellung einer dritten Ausführungsform durch die **Figs. 16** bis **19** beschrieben.

In **Fig. 16** ist in dreidimensionaler Darstellung eine einteilige Verbindungsbefestigungsblende 56 dargestellt. Die Verbindungsbefestigungsblende 56 umfasst einen Blendenring 61 und zwei Blendenflanken 62. Die Breite des Blendenrings 61 ist so ausgelegt, dass die durch die beiden Blendenflanken 62 und den Blendenring 61 gebildete Nut die beiden Endtüllen 55 benachbarter Faltenbalgsegmente 54 sowie die Breite der Ausnehmung eines Führungsrahmens 53 einfassen kann.

Die beiden Blendenflanken 62 weisen an ihrem radial äußersten Rand zwei nach innen gerichtete Eingriffskanten 63 auf. Diese dient dazu, durch Quetschung des weichen, nachgiebigen Materials der Endtüllen 55 eine verbesserte Kraftübertragung und Verbindung zu ermöglichen.

**Fig. 17** zeigt in perspektivischer aufgeschnittener Darstellung ein Faltenbalgsegment 54 mit seinen beiden formidentischen Endtüllen 55. An der linken der beiden Endtüllen 55 ist eine einteilige Verbindungsbefestigungsblende 56 angeordnet, die die Endtülle 55 einfasst.

**Fig. 18** zeigt daran anschließend in einer perspektivischen Ausschnittsdarstellung die Verbindung zweier benachbarter Faltenbalgsegmente 54 durch Aufnahme ihrer benachbarten Endtüllen 55 in die durch die beiden Blendenflanken 62 und den Blendenring 61 gebildete Nut der Verbindungsbefestigungsblende 56.

Aufbauend auf der Darstellung der **Fig. 18** zeigt die **Fig. 19a** in einer entsprechenden perspektivischen Ausschnittsdarstellung neben der Verbindung der beiden Faltenbalgsegmente 54 zusätzlich noch den zwischen den beiden Endtüllen 55 angeordneten Führungsrahmen 53, der mit dem Rand seiner Ausnehmung ebenfalls in die Nut der Verbindungsbefestigungsblende 56 eingreift. Schließlich stellt **Fig. 19b** in einer aufgeschnittenen perspektivischen Darstellung zwei benachbarte Faltenbalgsegmente 54 eines Schutzbalgs dar, die mittels der einteiligen Verbindungsbefestigungsblende 56 miteinander verbunden und an dem Führungsrahmen 53 befestigt sind.

Abschließend wird darauf hingewiesen, dass es bei einem erfindungs gemäßen Schutzbalg ebenfalls denkbar ist, nicht an jeder Verbindungsstelle benachbarter Faltenbalgsegmente einen Führungsrahmen vorzusehen, sondern es auch möglich ist, zumindest an einzelnen Verbindungsstellen auf die Befestigung der Faltenbalgsegmente mit einem Führungsrahmen zu verzichten. Somit wäre ein Schutzbalg geschaffen, der nicht an allen Verbindungsstellen mit einem Führungsrahmen zur Führung in einem Führungssystem ausgestattet ist, sondern zumindest einzelne Verbindungsstellen aufweiset, an denen lediglich die Endtüllen der Faltenbalgsegmente miteinander verbunden sind.

## Patentansprüche

1. Schutzbalg (46), der aus einer Aneinanderreihung einzelner Schutzbalgsegmente (45) besteht, wobei ein einzelnes Schutzbalgsegment (45) ein im wesentlichen zylindrisches Faltenbalgsegment (14, 18, 19, 37, 38, 47, 54), einen Führungsrahmen (20, 29, 42, 53) und mindestens eine Lochblende (12, 21, 44, 48, 50, 56) umfasst,
**gekennzeichnet dadurch,**
**dass** das Faltenbalgsegment (14, 18, 19, 37, 38, 47, 54) einstückig aus einem flexiblen Faltenbalgmaterial hergestellt ist, wobei am Faltenbalgsegment (14, 18, 19, 37, 38, 47, 54) an seinen beiden axialen Enden Verbindungselemente (22, 39, 50, 56) zum Verbinden mit benachbarten Faltenbalgsrgmenten (14, 18, 19, 37, 38, 47, 54) angeordnet sind, sowie an mindestens einem der beiden Enden Befestigungselemente (22, 39, 50, 56) zur Befestigung des Faltenbalgsegments (14, 18, 19, 37, 38, 47, 54) mit dem Führungsrahmen (20, 29, 42, 53) angeordnet sind, und an mindestens einem der beiden Enden Aufnahmeelemente (22, 39, 50, 56) zur Aufnahme und Halterung der Lochblende (12, 21, 44, 48, 50, 56) angeordnet sind.

2. Schutzbalg (46) nach Anspruch 1,
**dadurch gekennzeichnet,**
**dass** der Führungsrahmen (20, 29, 42, 53) und die Lochblende (12, 21, 44, 48, 50, 56) im Wesentlichen in einer Ebene liegen.

3. Schutzbalg (46) nach Anspruch 1 oder 2,
**dadurch gekenntzeichnet,**
**dass** die beiden axialen Enden des Faftenbalgsegments (14, 18, 19, 37, 38, 47, 54) als Endtüllen (16, 17, 27, 28, 40, 41, 55) ausgeformt sind, an denen die Verbindungselemente, Befestigungselemente und Aufnahmeelemente (22, 39) angeordnet sind.

4. Schutzbalg (46) nach Anspruch 3,
**dadurch gekennzeichnet,**
**dass** die erste der beiden axialen Endtüllen (17, 28, 41) des Faltenbalgsegmentes (14, 18, 19, 37, 38, 47, 54) einen Innenradius aufweist, der größer gleich dem Außendurchmesser der zweiten der beiden axialen Endtüllen (16, 27, 40) ist, so dass zwei benachbarte Faltenbalgsegmente (14, 18, 19, 37, 38, 47, 54) durch Einstecken der zweiten Endtülle (16, 27, 40) des zweiten Faltenbalgsegments (19, 38) in die erste Endtülle (17, 28, 41) des benachbarten ersten Faltenbalgsegments (18, 37) miteinander verbunden werden können.

5. Schutzbalg (46) nach Anspruch 3 oder 4,
**dadurch gekennzeichnet,**
**dass** die Verbindungselemente (22, 39) der beiden Endtüllen (16, 17, 27, 28, 40, 41, 55) des Faltenbalgsegments (14, 18, 19, 37, 38, 47, 54) mindestens eine im Innenmantel der ersten Endtülle (17, 28, 41) umlaufende Verbindungslippe (24) und mindestens einen am Außenmantel der zweiten Endtülle (16, 27, 40) umlaufenden Verbindungsfalz (23) umfassen, so dass die Verbindungslippe (24) der ersten Endtülle (17, 28, 41) eines ersten Faltenbalgsegments (18, 37) durch Einschnappen in den Verbindungsfalz (23) der zweiten Endtülle (16, 27, 40) eines zweiten benachbarten Faltenbalgsegments (19, 38) eine formschlüssige Verbindung herstellt.

6. Schutzbalg (46) nach einem der Ansprüche 3 bis 5,
**dadurch gekennzeichnet,**
**dass** die Befestigungselemente zur Befestigung des Faltenbalgsegments (14, 18, 19, 37, 38, 47, 54) mit dem Führungsrahmen (20, 29, 42, 53) eine den Außenmantel der ersten Endtülle (17, 28, 41) umlaufende Befestigungsnut (25) umfassen, in die der Führungsrahmen (20, 29, 42, 53) formschlüssig eingreift.

7. Schutzbalg (46) nach Anspruch 6,
**dadurch gekennzeichnet,**
**dass** das Faltenbalgsegment (14, 18, 19, 37, 38, 47, 54) durch formschlüssiges Einschnappen der Befestigungsnut (25) in eine Ausnehmung des Führungsrahmens (34) an diesem befestigt wird.

8. Schutzbalg (46) nach Anspruch 7,
**dadurch gekennzeichnet,**
**dass** der Führungsrahmen (20, 29, 42, 53) eine im wesentlichen kreisförmige Ausnehmung aufweist, deren Durchmesser im wesentlichen kleiner gleich dem Durchmesser der Befestigungsnut (25) entspricht.

9. Schutzbalg (46) nach Anspruch 6, 7 oder 8,
**dadurch gekennzeichnet,**
**dass** der Führungsrahmen (20, 29, 42, 53) einteilig aufgebaut ist.

10. Schutzbalg (46) nach Anspruch 6, 7 oder 8,
**dadurch gekennzeichnet,**
**dass** der Führungsrahmen (20, 29, 42, 53) mehrteilig, insbesondere zweiteilig (32, 33) aufgebaut ist, und das Faltenbalgsegment (14, 18, 19, 37, 38, 47, 54) mit dem Führungsrahmen (20, 29, 42, 53) **dadurch** verbunden wird, dass die einzelnen Teile des Führungsrahmens (20, 29, 42, 53) in die Befestigungsnut (25) des Faltenbalgsegments (14, 18, 19, 37, 38, 47, 54) eingeschoben und anschließend die Teile des Führungsrahmens (20, 29, 42, 53) mit Führungsrahmenverbindungsmitteln (35) miteinander verbunden werden.

11. Schutzbalg (46) nach Anspruch 10,
**dadurch gekenntzeichnet,**
**dass** durch Verbindung der einzelnen Teile des Führungsrahmens (20, 29, 42, 53) der Gesamtverbund aus den beiden verbundenen Faltenbalgsegmenten (14, 18, 19, 37, 38, 47, 54), Lochblende (12, 21, 44, 48, 50, 56) und Führungsrahmen (20, 29, 42, 53) kraft- und formschlüssig fixiert und befestigt wird.

12. Schutzbalg (46) nach Anspruch 10 oder 11,
**dadurch gekennzeichnet,**
**dass** die einzelnen Teile des Führungsrahmens (20, 29, 42, 53) formschlüssig ineinander greifen und mittels Fixiernasen (36) gegeneinander fixiert sind.

13. Schutzbalg (46) nach einem der Ansprüche 3 bis 12,
**dadurch gekennzeichnet,**
**dass** die Aufnahmeelemente (22, 39) zur Aufnahme und Halterung der Lochblende (12, 21, 44, 48, 50, 56) eine den Innenmantel der zweiten Endtülle (16, 27, 40) umlaufende Aufnahmenut (26) umfassen.

14. Schutzbalg (46) nach Anspruch 13,
**dadurch gekennzeichnet,**
**dass** die Lochblende (12, 21, 44, 48, 50, 56) kreisförmig ausgeformt ist und einen Außendurchmesser aufweist, der im wesentlichen größer gleich dem Durchmesser der Aufnahmenut (26) ist, so dass die Lochblende (12, 21, 44, 48, 50, 56) in die Aufnahmenut (26) eingeschnappt werden kann.

15. Schutzbalg (46) nach Anspruch 6 und 13
**dadurch gekennzeichnet,**
**dass** im verbundenen Zustand zweier Faltenbalgsegmente (14, 18, 19, 37, 38, 47, 54) die umlaufende Befestigungsnut der ersten Endtülle (17, 28, 41) des ersten Faltenbalgsegmcnts (18, 37) im wesentlichen in der Ebene der umlaufenden Aufnahmenut (26) der zweiten Endtülle (16, 27, 40) des zweiten Faltenbalgsegments (19, 38) liegt, so dass die in der Aufnahmenut (26) der zweiten Endtülle (16, 27, 40) des zweiten Faltenbalgsegments (19, 38) aufgenommene Lochblende (12, 21, 44, 48, 50, 56) im wesentlichen in der gleichen Ebene wie der in der Befestigungsnut (25) der ersten Endtülle (17, 28, 41) des ersten Faltenbalgsegmentes (18, 37) befestigte Führungsrahmen (20, 29, 42, 53) liegt.

16. Schutzbalg (46) nach einem der Ansprüche 1 bis 3,
**dadurch gekennzeichnet,**
**dass** im Verbindungsbereich zweier benachbarter Faltenbalgsegmente (14, 18, 19, 37, 38, 47, 54) eine Verbindungsbefestigungsblende (50, 56) angeordnet ist, wobei die Verbindungsbefestigungsblende (50, 56) die Funktion eines Verbindungselements zweier benachbarter Faltenbalgsegmente (14, 18, 19, 37, 38, 47, 54) und eines Befestigungselements zur Befestigung des Faltenbalgsegments mit dem Führungsrahmen erfüllt.

17. Schutzbalg (46) nach Anspruch 16,
**dadurch gekennzeichnet,**
**dass** die Verbindungsbefestigungsblende (50,56) im Wesentlichen einen Blendenring (58, 60, 61) und zwei Flanken (57, 59, 62) umfasst, wobei die beiden Flanken (57, 59, 62) die Endtüllen (55) der beiden benachbarten Faltenbalgsegmente (54) umgreifen und im Bereich des Blendenrings (58, 60, 61) zwischen den beiden Endtüllen (55) in die Ausnehmung des Führungsrahmens (53) eingreifen.

18. Schutzbalg (46) nach Anspruch 16 oder 17,
**dadurch gekenntzeichnet,**
**dass** die Verbindungsbefestigungsblende (50, 56) aus einem elastischen Material, insbesondere Kunststoff, besteht.

19. Schutzbalg (46) nach Anspruch 16 bis 18,
**dadurch gekennzeichnet,**
**dass** die Verbindungsbefestigungsblende (50) zweiteilig aufgebaut ist und eine Außenblende (51) und eine Innenblende (52) umfasst, die durch passgenaues Zusammenstecken von Außenblendenring (58) über Innunblendenring (60) die Verbindungsbefestigungsblende (50) bilden.

20. Schutzbalg (46) nach Anspruch 19,
**dadurch gekennzeichnet,**
**dass** Außenblende (51) und Innenblende (52) durch eine Schnapp-Rast-Verbindung miteinander verbunden werden.

21. Schutzbalg (46) nach Anspruch 19,
**dadurch gekennzeichnet,**
**dass** Außenblende (51) und Innenblende (52) durch Verkleben, Verschweißen, Vernieten oder ähnliches miteinander verbunden werden.

22. Schutzbalg (46) nach Anspruch 17 oder 18,
**dadurch gekennzeichnet,**
**dass** die Verbindungsbefestigungsblende (56) einteilig aufgebaut ist.

23. Schutzbalg (46) nach Anspruch 17,
**dadurch gekennzeichnet,**
**dass** die Blendenflanken (57, 59, 62) nach innen gerichtete umlaufende Eingriffskanten (63) aufweisen, die in die Endtüllen (55) der Faltenbalgsegmente (54) eingreifen.

24. Schutzbalg (46) nach Anspruch 16 bis 23,
**dadurch gekennzeichnet,**
**dass** die Verbindungsbefestigungsblende (50, 56) des Weiteren mindestens ein Aufnahmeelement zur Aufnahme und Halterung einer Lochblende (12, 21, 44, 48, 50, 56) umfasst.

25. Schutzbalg (46) nach Anspruch 16 bis 23,
**dadurch gekennzeichnet,**
**dass** die Verbindungsbefestigungsblende (50, 56) die Funktion der Lochblende (12, 21, 44, 48, 50, 56) übernimmt.

26. Schutzbalg (46) nach einem der vorangegangenen Ansprüche,
**dadurch gekennzeichnet,**
**dass** der Führungsrahmen (20, 29, 42, 53) eine Führungshalterung (31, 43) aufweist, um den Führungsrahmen (20, 29, 42, 53) an Führungsschienen (02, 30, 49) verschieblich zu halten und zu führen.

27. Schutzbalg (46) nach einem der vorangegangenen Ansprüche,
**dadurch gekennzeichnet,**
**dass** das Faltenbalgsegment (14, 18, 19, 37, 38, 47, 54) aus einem gasdichten, elastischen und flexiblen Material, bevorzugt aus CR (Chlorbutadien-Kautschuk) besteht.

28. Schutzbalg (46) nach einem der vorangegangenen Ansprüche,
**dadurch gekennzeichnet,**
**dass** das Faltenbalgmaterial selbstverlöschend ist und die Vorgabe der UL94-VO erfüllt.

29. Schutzbalg (46) nach einem der vorangegangenen Ansprüche,
**dadurch gekennzeichnet,**
**dass** die Verbindung benachbarter Faltenbalgsegmente (14, 18, 19, 37, 38, 47, 54) mit befestigtem Führungsrahmen (20, 29, 42, 53) und aufgenommener Lochblende (12, 21, 44, 48, 50, 56) gasdicht ist.

30. Schutzbalg (46) nach einem der vorangegangenen Ansprüche,
**dadurch gekennzeichnet,**
**dass** die Winkelausrichtung des Führungsrahmens (20, 29, 42, 53) bezüglich der Längsachse des Faltenbaigseginents (14, 18, 19, 37, 38, 47, 54) mittels einer oder mehrerer Positionierungshilfen, insbesondere mittels mindestens einer Positionierungsnase festgelegt ist.

## Claims

1. Protection bellows (46) composed of a series of juxtaposed individual protection bellows segments (45), wherein one individual protection bellows segment (45) comprises one substantially cylindrical bellows segment (14, 18, 19, 37, 38, 47, 54), a guide frame (20, 29, 42, 53) and at least one aperture element (12, 21, 44, 48, 50, 56),
**characterized in that**
the bellows segment (14, 18, 19, 37, 38, 47, 54) is integrally formed of a flexible bellows material, wherein connecting elements (22, 39, 50, 56) for connection to adjacent bellows segments (14, 18, 19, 37, 38, 47, 54) are disposed on both axial ends of the bellows segment (14, 18, 19, 37, 38, 47, 54), wherein fastening elements (22, 39, 50, 56) for fastening the bellows segment (14, 18, 19, 37, 38, 47, 54) to the guide frame (20, 29, 42, 53) are disposed on at least one of said two ends, and wherein receiving elements (22, 39, 50, 56) for receiving and retaining the aperture element (12, 21, 44, 48, 50, 56) are disposed on at least one of said two ends.

2. Protection bellows (46) according to claim 1,
**characterized in that**
the guide frame (20, 29, 42, 53) and the aperture element (12, 21, 44, 48, 50, 56) are substantially arranged in one plane.

3. Protection bellows (46) according to claim 1 or 2,
**characterized in that**
both of the axial ends of the bellows segment (14, 18, 19, 37, 38, 47, 54) are designed as terminal sleeves (16, 17, 27, 28, 40, 41, 55) that have the connecting elements, the fastening elements and the receiving elements (22, 39) arranged thereon.

4. Protection bellows (46) according to claim 3,
**characterized in that**
the first one of the two axial terminal sleeves (17, 28, 41) of the bellows segment (14, 18, 19, 37, 38, 47, 54) exhibits an inner radius that is larger than or equal to the outer diameter of the second one of the two axial terminal sleeves (16, 27, 40), in such a manner that two adjacent bellows segments (14, 18, 19, 37, 38, 47, 54) can be connected to one another by means of inserting the second terminal sleeve (16, 27, 40) of the second bellows segment (19, 38) into the first terminal sleeve (17, 28, 41) of the adjacent first bellows segment (18, 37).

5. Protection bellows (46) according to claim 3 or 4,
**characterized in that**
the connecting elements (22, 39) of the two terminal sleeves (16, 17, 27, 28, 40, 41, 55) of the bellows segment (14, 18, 19, 37, 38, 47, 54) comprise at least one connecting lip (24) extending along the periphery of the inner sheath of the first terminal sleeve (17, 28, 41) and at least one connecting fold (23) extending along the periphery of the outer sheath of the second terminal sleeve (16, 27, 40), in such a manner that the connecting lip (24) of the first terminal sleeve (17, 28, 41) of a first bellows segment (18, 27) establishes a form-fitting connection by means of snap-fittingly engaging with the connecting fold (23) of the second terminal sleeve (16, 27, 40) of a second adjacent bellows segment (19, 38).

6. Protection bellows (46) according to any of claims 3 to 5,
**characterized in that**
the fastening elements for fastening the bellows segment (14, 18, 19, 37, 38, 47, 54) to the guide frame (20, 29, 42, 53) comprise a fastening groove (25) with which the guide frame (20, 29, 42, 53) form-fittingly engages and that extends along the periphery of the outer sheath of the first terminal sleeve (17, 28, 41).

7. Protection bellows (46) according to claim 6,
**characterized in that**
by means of the positive snap-fitting engagement of the fastening groove (25) with a recess of the guide frame (34) the bellows segment (14, 18, 19, 37, 38, 47, 54) is connected to the same.

8. Protection bellows (46) according to claim 7,
**characterized in that**
the guide frame (20, 29, 42, 53) exhibits a substantially circular recess having a diameter that is essentially smaller than or equal to the diameter of the fastening groove (25).

9. Protection bellows (46) according to claim 6, 7 or 8,
**characterized in that**
the guide frame (20, 29, 42, 53) is formed as one piece.

10. Protection bellows (46) according to claim 6, 7 or 8,
**characterized in that**
the guide frame (20, 29, 42, 53) is formed of several parts, in particular formed of two parts (32, 33), and the bellows segment (14, 18, 19, 37, 38, 47, 54) is connected to the guide frame (20, 29, 42, 53) by means of inserting the individual parts of the guide frame (20, 29, 42, 53) into the fastening groove (25) of the bellows segment (14, 18, 19, 37, 38, 47, 54), and the parts of the guide frame (20, 29, 42, 53) are subsequently connected to one another with the aid of guide frame connecting means (35).

11. Protection bellows (46) according to claim 10,
**characterized in that**
by means of connecting the individual parts of the guide frame (20, 29, 42, 53), the structural unit composed of the two connected bellows segments (14, 18, 19, 37, 38, 47, 54), the aperture element (12, 21, 44, 48, 50, 56) and the guide frame (20, 29, 42, 53) is fixed and fastened in a form-fitting and force-fitting manner.

12. Protection bellows (46) according to claim 10 or 11,
**characterized in that**
the individual parts of the guide frame (20, 29, 42, 53) form-fittingly engage with one another and are fixed against one another by means of fixing projections (36).

13. Protection bellows (46) according to any of claims 3 to 12,
**characterized in that**
the receiving elements (22, 39) for receiving and retaining the aperture element (12, 21, 44, 48, 50, 56) comprise a receiving groove (26) extending along the periphery of the inner sheath of the second terminal sleeve (16, 27, 40).

14. Protection bellows (46) according to claim 13,
**characterized in that**
the aperture element (12, 21, 44, 48, 50, 56) exhibits a circular shape and has an outer diameter that is essentially larger than or equal to the diameter of the receiving groove (26), in such a manner that the aperture element (12, 21, 44, 48, 50, 56) is snap-fittingly engageable with the receiving groove (26).

15. Protection bellows (46) according to claims 6 and 13,
**characterized in that**
when two bellows segments (14, 18, 19, 37, 38, 47, 54) are in the connected state, the peripheral fastening groove of the first terminal sleeve (17, 28, 41) of the first bellows segment (18, 37) is substantially arranged in the plane of the peripheral receiving groove (26) of the second terminal sleeve (16, 27, 40) of the second bellows segment (19, 38), in such a manner that the aperture element (12, 21, 44, 48, 50, 56) received in the receiving groove (26) of the second terminal sleeve (16, 27, 40) of the second bellows segment (19, 38) is substantially arranged in the same plane as the guide frame (20, 29, 42, 53) fastened in the fastening groove (25) of the first terminal sleeve (17, 28, 41) of the first bellows segment (18, 37).

16. Protection bellows (46) according to any of claims 1 to 3,
**characterized in that**
a connecting and fastening aperture element (50, 56) is arranged in the connecting region of two adjacent bellows segments (14, 18, 19, 37, 38, 47, 54), wherein the connecting and fastening aperture element (50, 56) fulfils the function of a connecting element of two adjacent bellows segments (14, 18, 19, 37, 38, 47, 54) and of a fastening element for fastening the bellows segment to the guide frame.

17. Protection bellows (46) according to claim 16,
**characterized in that**
the connecting and fastening aperture element (50, 56) substantially comprises an aperture ring (58, 60, 61) and two flanks (57, 59, 62), wherein the two flanks (57, 59, 62) enclose the terminal sleeves (55) of the two adjacent bellows segments (54), and engage with the recess of the guide frame (55) in the region of the aperture ring (58, 60, 61) between the two terminal sleeves (55).

18. Protection bellows (46) according to claim 16 or 17,
**characterized in that**
the connecting and fastening aperture element (50, 56) is formed of an elastic material, in particular of a plastic material.

19. Protection bellows (46) according to claims 16 to 18,
**characterized in that**
the connecting and fastening aperture element (50) is formed of two parts and comprises an external aperture element (51) and an internal aperture element (52) that form the connecting and fastening aperture element (50) by means of joining the outer aperture ring (58) with the inner aperture ring (60) in an accurately fitting manner.

20. Protection bellows (46) according to claim 19,
**characterized in that**
the external aperture element (51) and the internal aperture element (52) are connected to one another by means of a snap-lock connection.

21. Protection bellows (46) according to claim 19,
**characterized in that**
the external aperture element (51) and the internal aperture element (52) are connected to one another by means of adhesive bonding, welding, riveting or similar methods.

22. Protection bellows (46) according to claim 17 or 18,
**characterized in that**
the connecting and fastening aperture element (56) is formed as one piece.

23. Protection bellows (46) according to claim 17,
**characterized in that**
the flanks of the aperture element (57, 59, 62) exhibit inwardly oriented peripheral engagement edges (63) that engage with the terminal sleeves (55) of the bellows segments (54).

24. Protection bellows (46) according to claims 16 to 23,
**characterized in that**
the connecting and fastening aperture element (50, 56) additionally comprises at least one receiving element for receiving and retaining an aperture element (12, 21, 44, 48, 50, 56).

25. Protection bellows (46) according to claims 16 to 23,
**characterized in that**
the connecting and fastening aperture element (50, 56) fulfils the function of the aperture element (12, 21, 44, 48, 50, 56).

26. Protection bellows (46) according to any of the preceding claims,
**characterized in that**
the guide frame (20, 29, 42, 53) exhibits a guide holder (31, 43) in order to slidingly hold and guide the guide frame (20, 29, 42, 53) along/on guide rails (02, 30, 49).

27. Protection bellows (46) according to any of the preceding claims,
**characterized in that**
the bellows segment (14, 18, 19, 37, 38, 47, 54) is composed of a gas-tight, elastic and flexible material, preferably of CR (chlorobutadiene rubber).

28. Protection bellows (46) according to any of the preceding claims,
**characterized in that**
the bellows material is self-extinguishing and meets the requirements of UL94-VO.

29. Protection bellows (46) according to any of the preceding claims,
**characterized in that**
the connection of adjacent bellows segments (14, 18, 19, 37, 38, 47, 54) with the fastened guide frame (20, 29, 42, 53) and the received aperture element (12, 21, 44, 48, 50, 56) is gas-tight.

30. Protection bellows (46) according to any of the preceding claims,
**characterized in that**
the angular orientation of the guide frame (20, 29, 42, 53) relative to the longitudinal axis of the bellows segment (14, 18, 19, 37, 38, 47, 54) is set by means of one or several positioning aids, in particular by means of at least one positioning projection.

## Revendications

1. Soufflet de protection (46) constitué d'une série d'individuels segments de soufflet de protection (45) juxtaposés, dans lequel un segment de soufflet de protection (45) individuel comprend un segment de soufflet (14, 18, 19, 37, 38, 47, 54) essentiellement de forme cylindrique, un cadre de guidage (20, 29, 42, 53) et au moins un élément d'ouverture (12, 21, 44, 48, 50, 56),
**caractérisé en ce que**
le segment de soufflet (14, 18, 19, 37, 38, 47, 54) est formé solidairement d'un matériau de soufflet flexible, dans lequel des éléments de connexion (22, 39, 50, 56) pour la connexion avec des segments de soufflet (14, 18, 19, 37, 38, 47, 54) voisins sont disposés sur les deux extrémités du segment de soufflet (14, 18, 19, 37, 38, 47, 54), dans lequel des éléments de fixation (22, 39, 50, 56) pour fixer le segment de soufflet (14, 18, 19, 37, 38, 47, 54) avec le cadre de guidage (20, 29, 42, 53) sont disposés sur au moins une des deux extrémités, et dans lequel des éléments de réception (22, 39, 50, 56) pour recevoir et retenir l'élément d'ouverture (12, 21, 44, 48, 50, 56) sont disposés sur au moins une des deux extrémités.

2. Soufflet de protection (46) selon la revendication 1,
**caractérisé en ce que**
le cadre de guidage (20, 29, 42, 53) et l'élément d'ouverture (12, 21, 44, 48, 50, 56) sont disposés essentiellement dans le même plan.

3. Soufflet de protection (46) selon la revendication 1 ou 2,
**caractérisé en ce que**
les deux extrémités axiales du segment de soufflet (14, 18, 19, 37, 38, 47, 54) sont conçues en tant que douilles terminales (16, 17, 27, 28, 40, 41, 55) ayant les éléments de connexion, les éléments de fixation et les éléments de réception agencés sur celles-ci.

4. Soufflet de protection (46) selon la revendication 3,
**caractérisé en ce que**
la première des deux douilles terminales axiales (17, 28, 41) du segment de soufflet (14, 18, 19, 37, 38, 47, 54) présente un rayon intérieur qui est plus grand que ou égal au diamètre extérieur de la seconde des deux douilles terminales axiales (16, 27, 40) de telle sorte que deux segments de soufflet (14, 18, 19, 37, 38, 47, 54) voisins sont connectables l'un avec l'autre au moyen d'une insertion de la seconde douille terminale (16, 27, 40) du second segment de soufflet (19, 38) dans la première douille terminale (17, 28, 41) du premier segment de soufflet (18, 37) voisin.

5. Soufflet de protection (46) selon la revendication 3 ou 4,
**caractérisé en ce que**
les éléments de connexion (22, 39) des deux douilles terminales (16, 17, 27, 28, 40, 41, 55) du segment de soufflet (14, 18, 19, 37, 38, 47, 54) comprennent au moins une lèvre de jonction (24) s'étendant le long de la périphérie de l'enveloppe intérieure de la première douille terminale (17, 28, 41) et au moins un pli de jonction (23) s'étendant le long de la périphérie de l'enveloppe extérieure de la seconde douille terminale (16, 27, 40) de telle manière que la lèvre de jonction (24) de la première douille de soufflet (17, 28, 41) d'un premier segment de soufflet (18, 37) établit une connexion à engagement positif par encliquetage dans le pli de jonction (23) de la seconde douille terminale (16, 27, 40) d'un second segment de soufflet (19, 38) voisin.

6. Soufflet de protection (46) selon l'une quelconque des revendications 3 à 5,
**caractérisé en ce que**
les éléments de fixation pour fixer le segment de soufflet (14, 18, 19, 37, 38, 47, 54) avec le cadre de guidage (20, 29, 42, 53) comprennent une rainure de fixation (25) s'étendant le long de la périphérie de l'enveloppe extérieure de la première douille terminale (17, 28, 41), le cadre de guidage (20, 29, 42, 53) étant engrené par engagement positif dans ladite rainure.

7. Soufflet de protection (46) selon la revendication 6,
**caractérisé en ce qu'**
au moyen d'un encliquetage à engagement positif de la rainure de fixation (25) dans un évidement du cadre de guidage (34) le segment de soufflet (14, 18, 19, 37, 38, 47, 54) est fixé à celui-ci.

8. Soufflet de protection (46) selon la revendication 7,
**caractérisé en ce que**
le cadre de guidage (20, 29, 42, 53) présente un évidement essentiellement de forme circulaire ayant un diamètre qui est essentiellement plus petit que ou égal au diamètre de la rainure de fixation (25).

9. Soufflet de protection (46) selon la revendication 6, 7 ou 8,
**caractérisé en ce que**
le cadre de guidage (20, 29, 42, 53) est réalisé d'une seule pièce.

10. Soufflet de protection (46) selon la revendication 6, 7 ou 8,
**caractérisé en ce que**
le cadre de guidage (20, 29, 42, 53) est formé en plusieurs parties, en particulier en deux parties (32, 33), et le segment de soufflet (14, 18, 19, 37, 38, 47, 54) est relié avec le cadre de guidage (20, 29, 42, 53) du fait que les parties individuelles du cadre de guidage (20, 29, 42, 53) sont insérées dans la rainure de fixation (25) du segment de soufflet (14, 18, 19, 37, 38, 47, 54) et les parties du cadre de guidage (20, 29, 42, 53) sont ensuite reliées les unes avec les autres à l'aide de moyens pour la connexion du cadre de guidage (35).

11. Soufflet de protection (46) selon la revendication 10,
**caractérisé en ce qu'**
au moyen de la connexion des parties individuelles du cadre de guidage (20, 29, 42, 53) l'unité structurelle composée des deux segments de soufflet (14, 18, 19, 37, 38, 47, 54) reliés, de l'élément d'ouverture (12, 21, 44, 48, 50, 56) et du cadre de guidage (20, 29, 42, 53) est fixée et reliée par engagement positif et par adhérence.

12. Soufflet de protection (46) selon la revendication 10 ou 11,
**caractérisé en ce que**
les parties individuelles du cadre de guidage (20, 29, 42, 53) s'engagent mutuellement par engagement positif et sont fixées les unes contre les autres au moyen de saillies de fixation (36).

13. Soufflet de protection (46) selon l'une quelconque des revendications 3 à 12,
**caractérisé en ce que**
les éléments de réception (22, 39) pour recevoir et retenir l'élément d'ouverture (12, 21, 44, 48, 50, 56) comprennent une rainure de réception (26) s'étendant le long de la périphérie de l'enveloppe intérieure de la seconde douille terminale (16, 27, 40).

14. Soufflet de protection (46) selon la revendication 13,
**caractérisé en ce que**
l'élément d'ouverture (12, 21, 44, 48, 50, 56) est conçu de forme circulaire et présente un diamètre extérieur qui est essentiellement plus grand que ou égal au diamètre de la rainure de réception (26) de façon à permettre à l'élément d'ouverture (12, 21, 44, 48, 50, 56) de s'encliqueter dans la rainure de réception (26).

15. Soufflet de protection (46) selon les revendications 6 et 13,
**caractérisé en ce que**
dans l'état de connexion de deux segments de soufflet (14, 18, 19, 37, 38, 47, 54) la rainure de fixation périphérique de la première douille terminale (17, 28, 41) du premier segment de soufflet (18, 37) est aménagée essentiellement dans le même plan que la rainure de réception (26) périphérique de la seconde douille terminale (16, 27, 40) du second segment de soufflet (19, 38) de telle sorte que l'élément d'ouverture reçu dans la rainure de réception (26) de la seconde douille terminale (16, 27, 40) du second segment de soufflet (19, 38) est agencé essentiellement dans le même plan que le cadre de guidage (20, 29, 42, 53) fixé dans la rainure de fixation (25) de la première douille terminale (17, 28, 41) du premier segment de soufflet (18, 37).

16. Soufflet de protection (46) selon l'une quelconque des revendications 1 à 3,
**caractérisé en ce qu'**
un élément d'ouverture pour la fixation et la connexion (50, 56) est agencé dans la région de connexion de deux segments de soufflet (14, 18, 19, 37, 38, 47, 54) voisins, l'élément d'ouverture pour la fixation et la connexion (50, 56) exécutant la fonction d'un élément de connexion de deux segments de soufflet (14, 18, 19, 37, 38, 47, 54) voisins et d'un élément de fixation pour fixer le segment de soufflet avec le cadre de guidage.

17. Soufflet de protection (46) selon la revendication 16,
**caractérisé en ce que**
l'élément d'ouverture pour la fixation et la connexion (50, 56) comprend essentiellement un anneau d'ouverture (58, 60, 61) et deux flancs (57, 59, 62), les deux flancs (57, 59, 62) entourant les douilles terminales (55) des deux segments de soufflet (54) voisins et étant engrenés dans l'évidement du cadre de guidage (53) dans la région de l'anneau d'ouverture (58, 60, 61) entre les deux douilles terminales (55).

18. Soufflet de protection (46) selon la revendication 16 ou 17,
**caractérisé en ce que**
l'élément d'ouverture pour la fixation et la connexion (50) est formé d'un matériau élastique, particulièrement d'un matériau synthétique.

19. Soufflet de protection (46) selon les revendications 16 à 18,
**caractérisé en ce que**
l'élément d'ouverture pour la fixation et la connexion (50) est réalisé en deux parties et comprend un élément d'ouverture extérieur (51) et un élément d'ouverture intérieur (52) formant l'élément d'ouverture pour la fixation et la connexion (50) au moyen d'une jonction de l'anneau d'ouverture extérieur (58) avec l'anneau d'ouverture intérieur (60) de façon précisément ajusté.

20. Soufflet de protection (46) selon la revendication 19,
**caractérisé en ce que**
l'élément d'ouverture extérieur (51) et l'élément d'ouverture intérieur (52) sont reliés l'un avec l'autre au moyen d'une connexion par encliquetage/enclenchement.

21. Soufflet de protection (46) selon la revendication 19,
**caractérisé en ce que**
l'élément d'ouverture extérieur (51) et l'élément d'ouverture intérieur (52) sont reliés l'un avec l'autre au moyen d'un collage, soudage, rivetage ou de procédés pareils.

22. Soufflet de protection (46) selon la revendication 17 ou 18,
**caractérisé en ce que**
l'élément d'ouverture pour la fixation et la connexion (56) est réalisé d'une seule pièce.

23. Soufflet de protection (46) selon la revendication 17,
**caractérisé en ce que**
les flancs de l'élément d'ouverture (57, 59, 62) présentent des bords d'engagement (63) périphériques orientés vers l'intérieur et étant engrenés dans les douilles terminales (55) des segments de soufflet (54).

24. Soufflet de protection (46) selon les revendications 16 à 23,
**caractérisé en ce que**
l'élément d'ouverture pour la fixation et la connexion (50, 56) en outre comprend au moins un élément de réception pour recevoir et retenir un élément d'ouverture (12, 21, 44, 48, 50, 56).

25. Soufflet de protection (46) selon les revendications 16 à 23,
**caractérisé en ce que**
l'élément d'ouverture pour la fixation et la connexion (50, 56) exécute la fonction de l'élément d'ouverture (12, 21, 44, 48, 50, 56).

26. Soufflet de protection (46) selon l'une quelconque des revendications précédentes,
**caractérisé en ce que**
le cadre de guidage (20, 29, 42, 53) présente un support de guidage (31, 43) afin de retenir et guider le cadre de guidage (20, 29, 42, 53) de façon coulissante sur et le long de rails de guidage (02, 30, 49).

27. Soufflet de protection (46) selon l'une quelconque des revendications précédentes,
**caractérisé en ce que**
le segment de soufflet (14, 18, 19, 37, 38, 47, 54) est composé d'un matériau étanche aux gaz, élastique et flexible, de préférence de CR (chlorobutadiène-caoutchouc).

28. Soufflet de protection (46) selon l'une quelconque des revendications précédentes,
**caractérisé en ce que**
le matériau de soufflet est auto-extinguible et satisfait aux exigences de la norme UL94-VO.

29. Soufflet de protection (46) selon l'une quelconque des revendications précédentes,
**caractérisé en ce que**
la connexion de segments de soufflet (14, 18, 19, 37, 38, 47, 54) voisins avec le cadre de guidage (20, 29, 42, 53) fixé et l'élément d'ouverture (12, 21, 44, 48, 50, 56) reçu est étanche aux gaz.

30. Soufflet de protection (46) selon l'une quelconque des revendications précédentes,
**caractérisé en ce que**
l'orientation angulaire du cadre de guidage (20, 29, 42, 53) par rapport à l'axe longitudinal du segment de soufflet (14, 18, 19, 37, 38, 47, 54) est défini au moyen d'une ou plusieurs aides de positionnement, en particulier au moyen d'au moins une saillie de positionnement.
